# EUROPÄISCHE PATENTSCHRIFT

(11) **EP 2 415 616 B1**
(45) Veröffentlichungstag und Bekanntmachung des Hinweises auf die Patenterteilung: **21.05.2014**
(21) Anmeldenummer: 11176243.1
(22) Anmeldetag: 02.08.2011
(51) Int. Cl.: B60B 27/02, F16D 41/24, B60B 27/04, F16D 41/36

(54) **Hinterradnabe mit Stirnradverzahnung**
Rear hub with spur gear cogging
Moyeu de roue arrière avec denture de pignon

(30) Priorität: 03.08.2010 US 370375 P; 03.08.2010 DE 102010033268; 03.08.2010 DE 102010033272
(43) Veröffentlichungstag der Anmeldung: 08.02.2012
(73) Patentinhaber: Klieber, Jochen, 83342 Tacherting (DE)
(72) Erfinder: Klieber, Jochen, 83342 Tacherting (DE)
(74) Vertreter: Maiwald Patentanwalts GmbH

(56) Entgegenhaltungen:
- WO-A1-00/34056
- DE-A1-102004 004 961
- US-A- 5 795 036
- US-A- 5 964 332
- US-A1- 2003 034 220
- US-A1- 2003 155 204
- US-A1- 2008 006 500

## Beschreibung

### GEBIET DER ERFINDUNG

Die vorliegende Erfindung betrifft eine Hinterradnabe für ein Fahrrad, ein hinteres Laufrad für ein Fahrrad sowie ein Fahrrad.

### HINTERGRUND DER ERFINDUNG

Um dem Benutzer eines Fahrrads, insbesondere eines Mountainbikes oder eines Rennrads, unterschiedliche Übersetzungen für unterschiedliche Geschwindigkeiten und unterschiedliche Straßen- bzw. Wegeprofile zur Verfügung zu stellen, werden Kettenschaltungen verwendet, bei denen an der Hinterradnabe mehrere unterschiedlich große Ritzel vorgesehen sind. Diese Ritzelpakete, auch als Zahnkranzpakete bezeichnet, sind mittels eines Freilaufs mit der Nabe, d.h. dem Nabenkörper, verbunden. Der Freilauf sorgt dafür, dass bei einer Vorwärtsbewegung der Pedale mittels der Kette die Antriebskraft auf das Hinterrad übertragen wird und dass bei einer entgegengesetzten Bewegungsrichtung, d.h. bei einem Rückwärtstreten bzw. einem Stillstand der Tretkurbel und gleichzeitigem Vorwärtsrollen des Fahrrads, der Zahnkranz, bzw. das Zahnkranzpaket, vom Nabenkörper entkoppelt wird. Insbesondere im Bereich des ambitionierten Mountainbikings und auch des professionellen Bergradsports sind die Kraft übertragenden Komponenten großen Kräften und extremen Belastungen ausgesetzt, während das Fahrrad gleichzeitig möglichst leicht sein muss. Die Anforderungen an das Gewicht sind dabei so hoch, dass bereits eine Reduzierung um wenige Gramm als Erfolg gilt. Aus der DE 10 2007 030 190 A1 ist eine Hinterradnabe bekannt, bei der eine Freilaufeinrichtung zwei Zahnscheiben mit Stirnverzahnung aufweist, die beide schwimmend gelagert sind und jeweils durch eine Feder gegeneinander gedrückt werden, wobei die Stirnverzahnungen so ausgebildet sind, dass das mittels der Kette auf den Zahnkranz aufgebrachte Drehmoment in der einen Richtung übertragen wird, während sich die Zahnscheiben in der entgegengesetzten Drehrichtung entgegen der Federkraft in axialer Richtung voneinander weg verschieben, so dass ein Freilauf gewährleistet ist. Es hat sich jedoch gezeigt, dass diese Nabe immer noch ein recht hohes Gewicht aufweist.

Die gattungsbildende US 5,964,332 beschreibt eine Hinterradnabe für ein Fahrrad mit einer Freilaufeinrichtung mit einer Stirnverzahnung. In einer Ausführungsvariante ist dabei vorgesehen, dass sich der Nabenkörper im Bereich des Freilaufs über eine Lagervorrichtung auf dem Freilaufkörper abstützt, welcher sich wiederum an dem Achskörper abstützt. In einer zweiten Variante sind Freilaufkörper und Nabenkörper direkt über Lager auf dem Achskörper abgestützt. Die Lager des Nabenkörpersbesitzen lumen-und Außenringe, welche jeweils nur in eines axialen Richtung über eine Haltevorrichtung gehalten werden. Beim Freilaufmechanismus ist ein Teil axial unverschieblich gehalten und ein zweiter Teil mittels schraubenförmiger Vorsprünge/Nuten axial beweglich bei gleichzeitiger zwangsgeführter Rotationsbewegung gehalten. Der bewegliche Teil ist mittels einer Spiralfeder gegen den unbeweglichen Teil vorgespannt. WO 00/34056 beschreibt eine Fahrradnabe mit einer Freilaufeinrichtung, die zwei Zahnscheiben aufweist, welche mit Federn gegeneinander gedrückt werden. Die Federn dienen zur schwimmenden Lagerung der Zahnscheiben und ermöglichen ein Verkippen der Zahnscheiben mit Bezug auf eine Ebene senkrecht zur axialen Mittellinie der Nabenachse. Der Nabenkörper ist über zwei Nabenlager gehalten, die axial in beiden Richtungen an ihrem inneren Laufring gehalten sind. DE 10 2004 004691 A1 beschreibt eine Fahrradnabe mit einer Freilaufeinrichtung, bei der zwei Freilaufscheiben eine Verzahnung aufweisen zur Kraftübertragung in der einen Richtung und als Freilauf in der anderen Richtung. Dabei ist eine Freilaufscheibe axial verschiebbar und über eine Feder in Richtung der anderen Freilaufscheibe gedrückt. Der Nabenkörper ist mit zwei Nabenlagern an der Achse gehalten, wobei die beiden Nabenlager an ihrem inneren Laufring jeweils in zwei Richtungen gehalten sind.

### ZUSAMMENFASSUNG DER ERFINDUNG

Es besteht ein Bedarf, eine Hinterradnabe zur Verfügung zu stellen, die bei einem weiter reduzierten Gewicht dennoch eine zuverlässige Kraftübertragung erlaubt.

Gemäß einem grundsätzlichen Aspekt der Erfindung ist eine Hinterradnabe für ein Fahrrad vorgesehen, mit einem Nabenkörper, einem Achskörper, einer ersten Lagervorrichtung, einem Freilaufkörper zur Aufnahme wenigstens eines Zahnrads, einer zweiten Lagervorrichtung und einer Freilaufeinrichtung. Die erste Lagervorrichtung ist derart zwischen dem Achskörper und dem Nabenkörper angeordnet, dass der Nabenkörper in Relation zum Achskörper um eine Drehachse drehbar gehalten ist. Die zweite Lagervorrichtung ist derart zwischen dem Achskörper und dem Freilaufkörper angeordnet, dass der Freilaufkörper in Relation zum Achskörper um die Drehachse drehbar gehalten ist. Die Freilaufeinrichtung ist zwischen dem Freilaufkörper und dem Nabenkörper angeordnet und bewirkt in einer ersten Drehrichtung um die Drehachse eine Kopplung zwischen dem Freilaufkörper und dem Nabenkörper. In einer zweiten Drehrichtung, die der ersten Drehrichtung entgegengesetzt ist, ist der Freilaufkörper gegenüber dem Nabenkörper frei drehbar. Die Freilaufeinrichtung weist eine erste und eine zweite Stirnverzahnung auf, die einander zugewandt sind und von denen die eine in Bezug zum Nabenkörper und die andere in Bezug zum Freilaufkörper drehstarr ausgebildet ist.

Gemäß der Erfindung weist die erste Lagervorrichtung ein erstes und ein zweites Nabenlager auf, die jeweils einen Innenring und einen Außenring aufweisen. Jedes Nabenlager ist mit dem Innenring axial in einer ersten Halterichtung in Bezug zur Nabenachse, bzw. in Bezug zum Achskörper, einseitig gehalten. Jedes Nabenlager ist außerdem mit dem Außenring in einer zweiten Halterichtung, die der ersten Halterichtung entgegengesetzt ist, in Bezug zum Nabenkörper einseitig gehalten, wobei die erste Halterichtung des zweiten Nabenlagers entgegengesetzt zur ersten Halterichtung des ersten Nabenlagers verläuft.

Der Begriff "Innenring" bezieht sich auf den inneren Laufring bzw. die innere Lauffläche des jeweiligen Lagers und der "Außenring" bezeichnet den äußeren Laufring bzw. die äußere Lauffläche des Lagers.

Der Begriff "einseitige Halterung" bezieht sich auf das Halten in einer Richtung, d.h. bei einer einseitigen Halterung ist in der einen Richtung ein Halt vorgesehen, während in der anderen Richtung eine Bewegung möglich ist.

Die Nabenlager sind also bezogen auf die Nabenachse, d.h. mit dem jeweiligen Innenring jeweils in axialer Richtung nur einseitig, d.h. auf einer Seite bzw. in einer Richtung, gehalten. Auf der anderen Seite des Innenrings, bzw. in der anderen Richtung ist an dem Innenring kein Halt vorgesehen. Das Gleiche trifft auf die Halterung bezüglich des Nabenkörpers zu, d.h. am jeweiligen Außenring, wo die Nabenlager ebenfalls nur einseitig in axialer Richtung gehalten sind.

Die Halterichtung des Innenrings des ersten Nabenlagers ist entgegengesetzt zur Halterichtung des Innenrings des zweiten Nabenlagers.

Dadurch lassen sich beispielsweise zusätzliche Anschläge und damit zusätzliches Material einsparen.

Die Nabenlager werden am Innenring durch eine von der einen Seite statisch wirkende Haltekraft, bzw. durch einen nur einseitig vorgesehenen Anschlag oder Anlagefläche gehalten und am Außenring durch eine von der anderen Seite statisch wirkende Haltekraft, bzw. durch einen auf der anderen Seite vorgesehenen, nur einseitigen Anschlag oder Anlagefläche gehalten. Keines der Lager ist also am Innenring oder Außenring auf jeweils zwei Seiten, d.h. in zwei Richtungen gehalten, d.h. ein Anschlag auf der einen Seite eines Innenrings (oder Außenrings) in Kombination mit einer auf der anderen Seite anliegenden Hülse sind nicht vorgesehen.

Bei der Haltekraft handelt es sich um eine sogenannte Null-Kraft, d.h. im Idealfall um einen mit Null-Toleranz wirkenden Anschlag, der auf das Lager keine Kraft im eigentlichen Sinne überträgt, sondern nur als spielfreier ― und auch kräftefreier ― Anschlag dient.

Gemäß dem oberhalb beschriebenen einseitigen, aber in entgegengesetzten Richtungen wirkenden Halten der Lager an Innenring und Außenring wird ein paralleler Null-Verlauf vermieden. Mit Null-Verlauf wird die spielfreie und zwangskräftefreie Halterung zweier an sich beweglicher Bauteile bezeichnet. Zwischen den beiden Nabenlagern, d.h. zwischen dem rechten und dem linken Nabenlager erfolgt dabei eine "Übertragung" einer Haltekraft, d.h. eine Verbindung der beiden Anschläge für das spiel- und zwangskräftefreie Halten nur über einen Weg, bzw. ein Bauteil, und nicht über zwei Wege gleichzeitig. Dadurch wird die Notwendigkeit einer exakten Längen-Abstimmung zweiter unterschiedlicher Bauteile vermieden, was bei einem parallelen Null-Verlauf der Fall wäre und nur sehr schwer zu erreichen ist. Wenn die Lager innenseitig, d.h. mit dem Innenring beispielsweise beide an dazwischenliegenden Schultern an der Achse (oder einer dazwischenliegenden Hülse) anliegen und gleichzeitig außenseitig, d.h. mit dem Außenring an dazwischenliegenden Anschlägen des Nabenkörpers anliegen sollen, muss eine präzise Abstimmung des Abstands der Schultern an der Achse und der Schultern an dem Nabenkörper erfolgen, was in der Praxis aufgrund der üblichen Toleranzen zu erheblichen Problemen führt.

Gleichzeitig bedeutet das axial einseitige Halten der Lager auch einen Gewichtsvorteil, da auf zusätzliche Anschläge oder Hülsen verzichtet werden kann.

Gemäß der Erfindung weist die zweite Lagervorrichtung ein erstes und ein zweites Freilauflager auf, die jeweils einen Innenring und einen Außenring aufweisen. Jedes Freilauflager ist mit dem Innenring axial in einer ersten Halterichtung in Bezug zur Nabenachse, d.h. zum Achskörper, einseitig gehalten. Jedes Freilauflager ist außerdem mit dem Außenring in einer zweiten Halterichtung, die der ersten Halterichtung entgegengesetzt ist, in Bezug zum Freilaufkörper einseitig gehalten, wobei die erste Halterichtung des zweiten Freilauflagers entgegengesetzt zur Halterichtung des ersten Freilauflagers verläuft.

Mit anderen Worten, das erste und das zweite Freilauflager sind in Bezug zur Nabenachse, d.h. mit dem jeweiligen Innenring in zueinander entgegengesetzten Richtungen gehalten, und das erste und das zweite Freilauflager sind in Bezug zum Freilaufkörper, d.h. mit dem jeweiligen Außenring ebenfalls in zueinander entgegengesetzten Richtungen gehalten.

Gemäß der Erfindung sind die Lager, d.h. Nabenlager und Freilauflager, jeweils mit einem zur Nabenachse hin innenliegenden Bereich in der einen axialen Richtung und mit dem äußeren, zum Naben- bzw. Freilaufkörper hin außenliegenden Bereich in der anderen axialen Richtung gehalten.

Gemäß einer möglichen Ausführungsform weist der Nabenkörper als axiale Anschläge für das erste und das zweite Nabenlager innenliegend einen ersten und einen zweiten Absatz auf. Der Freilaufkörper weist als axiale Anschläge für das erste und das zweite Freilauflager einen ersten und einen zweiten Absatz auf.

Gemäß einem weiteren Aspekt der Erfindung weist der Nabenkörper für das erste und das zweite Nabenlager eine erste und eine zweite Lageraufnahme auf, die jeweils zur Aufnahme des Nabenlagers ausgebildet sind. Die erste und die zweite Lageraufnahme sind jeweils als ein sich axial erstreckender zylindrischer Hohlraum ausgebildet, der auf der einen Stirnseite über die gesamte Querschnittsfläche offen ist zum Einsetzen des Lagers und auf der anderen Seite mit einem Absatz als axialer Anschlag für dessen Lager begrenzt ist.

Gemäß einer möglichen Ausführungsform weist der Freilaufkörper für das erste und das zweite Freilauflager eine erste und eine zweite Lageraufnahme auf, die jeweils zur Aufnahme des Freilauflagers ausgebildet sind. Die erste und die zweite Lageraufnahme sind jeweils als ein sich axial erstreckender zylindrischer Hohlraum ausgebildet, der auf der einen Stirnseite über die gesamte Querschnittsfläche offen ist zum Einsetzen des Lagers und auf der anderen Seite mit einem Absatz als axialer Anschlag für das Lager begrenzt ist.

Gemäß der Erfindung sind eine erste Endkappe und eine zweite Endkappe vorgesehen, die auf die beiden Enden der Nabenachse aufgesetzt sind und auf ihrer Innenseite derart an dem jeweiligen stirnseitigen Ende der Nabenachse anliegen, dass in montiertem Zustand eine in axialer Richtung auf die Hinterradnabe wirkende Einspannkraft von den Endkappen über den Achskörper übertragbar ist

Die Einspannkraft kann z.B. durch einen Schnellspannmechanismus hervorgerufen werden, mit dem die Hinterradnabe, und damit ein hinteres Laufrad, zwischen zwei Ausfallenden gehalten bzw. montiert wird; statt eines Schnellspannmechanismus kann beispielsweise auch ein Steckachsensystem verwendet werden, um die Einspannkraft zwischen den Ausfallenden zu erzeugen, bzw. aufzubringen (siehe auch weiter unten).

Gemäß der Erfindung ist die erste Endkappe als axialer Anschlag für das eine der beiden Nabenlager vorgesehen. Dadurch kann eine eventuell vorhandene Maßabweichung im Bereich der Endkappe aufgenommen werden, beispielsweise durch ein Ausgleichselement zwischen der Endkappe und der Stirnseite des Achskörpers (wenn eine Plus-Toleranz vorliegt, d.h. wenn ein oder mehrere Abmessungen zu groß sind) oder durch ein Ausgleichselement zwischen der Endkappe und dem Nabenlager, d.h. dem Innenring des Nabenlagers (wenn eine Minus-Toleranz vorliegt, d.h. wenn ein oder mehrere Maße zu gering sind).

Gemäß einem Aspekt der Erfindung ist vorgesehen, dass zumindest die Halterung der Nabenlager derart erfolgt, dass in der Abfolge der einzelnen Komponenten die addierten Ungenauigkeiten mittels eines Ausgleichelements im Bereich der Endkappe(n) ausgeglichen werden können.

Gemäß einer möglichen Ausführungsform ist die erste Endkappe als axialer Anschlag für das eine der beiden Nabenlager vorgesehen, und die zweite Endkappe als axialer Anschlag für das eine der beiden Freilauflager. Eine Hülse ist zwischen dem ersten Freilauflager und dem zweiten Nabenlager vorgesehen als axialer Anschlag für das zweite Freilauflager und das zweite Nabenlager. Beispielsweise ist eine Hülse zwischen dem anderen der beiden Freilauflager und dem anderen der beiden Nabenlager vorgesehen als ein dritter axialer Anschlag für das andere der beiden Freilauflager und als ein vierter axialer Anschlag für das andere der beiden Nabenlager.

Gemäß einer möglichen Ausführungsform ist vorgesehen, dass die Halterung der Nabenlager und die Halterung der Freilauflager derart erfolgt, dass in der kompletten Abfolge der einzelnen Komponenten die addierten Ungenauigkeiten mittels eines Ausgleichelements im Bereich der Endkappe(n) ausgeglichen werden können. Das Ausgleichelement kompensiert dabei die Längenabweichung, so dass die Endkappen die Einspannkraft direkt, bzw. auch indirekt über ein Ausgleichselement auf den Achsköper übertragen und eine Übertragung der Einspannkraft auf eines oder mehrere Naben-/Freilauflager nicht vorliegt. Eine Übertragung der Einspannkraft über die Lager, z.B. über einen inneren Laufring, erfolgt nicht.

Gemäß einer möglichen Ausführungsform ist vorgesehen, dass die Naben- und Freilauflager für den Zusammenbau der Hinterradnabe auf den Achskörper aufgeschoben werden können, zusammen mit dem Nabenkörper und dem Freilaufkörper. Eine der Endkappen wird dabei bis zum Anschlag an der Stirnseite auf den Achskörper geschoben. Wenn alle Komponenten montiert sind, kann beim Aufsetzen der zweiten Endkappe festgestellt werden, ob in der Summe eine Abweichung in der Länge vorliegt: Wird die zweite Endkappe ebenfalls bis zum Anschlag aufgeschoben und der Naben- oder Freilaufkörper lässt sich nur schwer drehen, dann unterliegt wenigstens eines der Lager eine Zwängung, d.h. einer aufgebrachten Kraft, die bestrebt ist, den einen Laufring in Bezug zum anderen Laufring in axialer Richtung zu verschieben. Wenn sich der Naben- oder Freilaufkörper mit axialem Spiel bewegen lässt, also vereinfacht gesagt etwas wackelt, dann ist zumindest eines der Lager nicht auf beiden Seiten gehalten.

Da die Lager am Innenring und Außenring aber immer nur auf einer Seite gehalten sind, kann nun der Ausgleich an einer an sich beliebigen Stelle erfolgen, da er über die gesamte Kette übertragen wird. Wie bereits erwähnt, ist dazu vorgesehen, dass die Haltekraft bzw. die Verbindung von zwei Anschlägen (siehe oben) immer nur auf einem Weg zwischen zwei benachbarten Teilen, d.h. insbesondere der Lager übertragen wird und kein paralleler Null-Verlauf, bzw. kein paralleler Haltekraft-Verlauf vorliegt, sondern sozusagen nur ein einwegiger Haltekraft-Verlauf. Der Toleranzausgleich erfolgt dabei in vorteilhafter Weise an einer gut zugänglichen Stelle im Zusammenhang mit den Endkappen, wobei der ermittelte Toleranzausgleich durch ein Element an einer Seite bzw. Ende, oder auch durch zwei auf beide Enden verteilte Elemente vorgenommen werden kann. Wenn es in der Abfolge zu Plus- als auch Minus-Toleranzen kommt, ermöglicht der stets einwegige Haltekraft-Verlauf auch ein Ausgleich innerhalb der Abfolge, so dass z.B. bei einer Übereinstimmung der Positiv- und Negativ-Abweichung im Ergebnis gar keine Gesamtabweichung ermittelt wird und ein zusätzlicher Ausgleich nicht erforderlich ist.

Das direkte Aufbringen der Einspannkraft von den Endkappen auf den Achskörper, worunter auch das Aufbringen über ein Ausgleichselement zwischen Endkappe und Achskörper verstanden wird, erfolgt unabhängig von der spielfreien Montage der Lager dadurch, dass die Endkappen an ihrer Innenseite an dem Achskörper anliegen, bzw. die Stirnenden des Achskörpers als Anschlag für die Endkappen dienen.

Das Ermitteln der korrekten spielfreien Montage der Lager, d.h. der Nabenlager und auch der Freilauflager, erfolgt dann bezogen auf den Abstand der auf dem Achskörper in festem Abstand vorgesehenen Endkappen.

Es sei darauf hingewiesen, dass gemäß der Erfindung auch ein Anschlag auf der Achse vorgesehen sein kann, an dem die Nabenlagerabfolge an einer Seite anliegt, beispielsweise auf der dem Freilaufkörper zugewandten Seite. Der Anschlag kann gleichzeitig auch für die Abfolge der Freilauflager dienen. Ein Toleranzausgleich wäre dann zumindest für die Nabenlagerabfolge im Bereich der Endkappe vorgesehen, die auf der dem Freilaufkörper gegenüberliegenden Seite angeordnet ist. Für die Freilauflagerabfolge kann dann ein Toleranzausgleich im Bereich der anderen Endkappe vorgesehen sein. Wichtig ist nur, dass zwischen zwei benachbarten Lagern nur ein Weg für die Übertragung der Haltekraft vorgesehen ist.

Gemäß einer möglichen Ausführungsform sind die Endkappen auf den Achskörper verlier- bzw. verrutschsicher aufgebracht. Dadurch ist es möglich, ein Hinterrad auszubauen, ohne dass eine Gefahr besteht, dass die einzelnen Komponenten von der Achse abrutschen. Beispielsweise sind die Endkappen mit einem derartigen lichten Innendurchmesser ausgebildet, dass sie gegen einen Widerstand auf den Achskörper aufgeschoben werden. Das Lösen kann dann beispielsweise mit einem Durchschlag erfolgen, so dass die Endkappen z.B. mittels leichter Hammerschläge von der Achse geschoben werden können.

Gemäß einer möglichen Ausführungsform sind die Endkappen austauschbar und zur Verwendung mit einer Schnellspannvorrichtung ausgebildet.

Gemäß einer möglichen Ausführungsform sind die Endkappen austauschbar und zur Verwendung mit einem Steckachsensystem ausgebildet, wobei die Endkappen einen stirnseitigen Anschlag aufweisen zum Anliegen an den Innenseiten der Ausfallenden. Die Endkappen weisen eine lichte Öffnung auf, durch die eine Steckachse geführt werden kann, die an einem Ende einen Anschlag aufweist, zum Anliegen an der Außenseite des einen Ausfallendes, und ein Außengewinde zum Einschrauben in ein Innengewinde an dem anderen Ausfallende.

Gemäß einer beispielhaften Ausführungsform der Erfindung weist die erste Lagervorrichtung ein erstes und ein zweites Nabenlager auf. Das erste und das zweite Nabenlager weisen jeweils zwei Lagereinheiten auf. Der Nabenkörper für das erste und das zweite Nabenlager weist eine erste und eine zweite Lageraufnahme auf, die jeweils zur Aufnahme der zwei Lagereinheiten ausgebildet sind, wobei pro Nabenlager eine der zwei Lagereinheiten gegen eine Distanzeinheit austauschbar ist.

Die Ausbildung mit zwei Lagereinheiten bedeutet bereits eine Gewichtseinsparung, da bei gleicher Belastbarkeit beide Lager zusammen ein geringeres Gesamtgewicht haben. Die Möglichkeit eine der Lagereinheiten gegen einen Distanzring auszutauschen, bedeutet eine weitere Möglichkeit zur Gewichtreduzierung, wenn auch bei geringerer Belastbarkeit (siehe weiter unten).

Vorzugsweise ist jeweils die zur Nabenmitte hin liegende Lagereinheit austauschbar.

Gemäß einer möglichen Ausführungsform sind die zwei Lagereinheiten baugleich.

Gemäß einer beispielhaften Ausführungsform der Erfindung ist die zweite Stirnverzahnung auf einem zweiten Scheibenkörper ausgebildet, der in eine Aufnahmeöffnung des Nabenkörpers eingeschraubt ist, wobei die Einschraubrichtung der Kopplungsrichtung entspricht.

Die drehstarre Verbindung erfolgt dabei ab dem Moment, in welchem der Scheibenkörper vollständig, d.h. bis zu einem Anschlag, eingeschraubt ist.

Um den Scheibenkörper beispielsweise zum Ersatz wieder entfernen zu können, kann der Scheibenkörper Ansatzstellen zum Ansetzen eines Werkzeugs aufweisen, um den Scheibenkörper aus der Aufnahme herauszuschrauben.

Durch das Einschrauben wird eine zuverlässige Kraftübertragung gewährleistet. Gleichzeitig kann der Scheibenkörper möglichst dünn, d.h. leicht ausgeführt werden, da die Kraftübertragung spielfrei erfolgt.

Gemäß einem weiteren Aspekt ist das Nabenlager, das zum Freilaufmechanismus hin orientiert ist, in den Nabenkörper eingesetzt.

Dadurch lässt sich das Nabenlager möglichst weit zum Achsenende hin anordnen, was eine Verbesserung der Hebelverhältnisse bedeutet, was wiederum eine geringere Biegebelastung des Achskörpers bewirkt.

Gemäß einem weiteren Aspekt der Erfindung kann der zweite Scheibenkörper alternativ auch dauerhaft mit dem Nabenkörper verbunden sein, zum Beispiel durch

Einpressen in eine Aufnahmeöffnung oder durch Verschweißen oder Verkleben mit dem Nabenkörper. Beispielsweise können auch Einpressen und Verschweißen oder Kleben kombiniert zur Anwendung kommen.

Gemäß einer möglichen Ausführungsform ist die zweite Stirnverzahnung direkt an dem Nabenkörper ausgebildet.

Gemäß einer weiteren Ausführungsform der Erfindung ist die erste Stirnverzahnung auf einem ersten Scheibenkörper ausgebildet, der in Bezug zur Drehachse schwimmend gehalten ist und durch eine Vorspanneinrichtung in Richtung der zweiten Stirnverzahnung gedrängt wird. Die Vorspanneinrichtung weist eine sich elastisch rückstellende Vorrichtung auf, die sich an dem Freilaufkörper abstützt und den ersten Scheibenkörper in Richtung der zweiten Stirnverzahnung drückt. Die sich elastisch rückstellende Vorrichtung ist dabei derart ausgebildet, dass der erste Scheibenkörper gleichmäßig in Richtung der zweiten Stirnverzahnung gedrückt ist und eine Vorspannkraft gegen ein Verkippen des ersten Scheibenkörpers erzeugbar ist.

Beispielsweise weist die Vorspanneinrichtung einen elastischen Ringkörper auf, der zwischen dem Freilaufkörper und dem ersten Scheibenkörper angeordnet ist, und an dem der erste Scheibenkörper anliegt.

Der elastische Ring kann in der Aufnahme des Freilaufkörpers zwischen einem Anschlag und dem ersten Scheibenkörper angeordnet sein.

Durch die Vorspanneinrichtung, z.B. den elastischen Ringkörper, wird der Scheibenkörper, und damit die erste Stirnverzahnung, gleichmäßig gegen die zweite Stirnverzahnung gedrückt. Die Vorspanneinrichtung wirkt dabei dem Kippen des Scheibenkörpers entgegen. Im Gegensatz zu herkömmlichen, um die Achse herum ausgebildeten Spiralfedern, drückt die erfindungsgemäße Vorspanneinrichtung auf den gesamten Scheibenkörper, während die erwähnten Spiralfedern hinsichtlich Kippen bei gleicher Vorspannkraft weicher sind. Dadurch lässt sich der erfindungsgemäße Scheibenkörper schmaler herstellen, d.h. leichter ausbilden. Damit steht auch mehr Platz für das Nabenlager in diesem Bereich zur Verfügung; je weiter außen die Nabenlager angeordnet werden, desto besser die Kraftübertragung von Laufrad zur (nicht gezeigten) Rahmenstruktur.

Gemäß einer möglichen Ausführungsform ist der erste Scheibenkörper in axialer Richtung schwimmend gehalten und der zweite Scheibenkörper ist in Richtung der Vorspannrichtung unbeweglich gehalten. Beispielsweise liegt der zweite Scheibenkörper fest an dem Nabenkörper an; z.B. ist der zweite Scheibenkörper in axialer Richtung an dem Nabenkörper befestigt, beispielsweise lösbar befestigt.

Gemäß einer möglichen Ausführungsform weist die Vorspanneinrichtung wenigstens drei Federn auf, die sich an dem Freilaufkörper abstützen und den ersten Scheibenkörper in Richtung der zweiten Stirnverzahnung drücken.

Gemäß einer möglichen Ausführungsform sind die Federn an dem ersten Scheibenkörper verliersicher gehalten.

Gemäß einer möglichen Ausführungsform sind die Federn als Kegelfedern ausgebildet.

Gemäß einer möglichen Ausführungsform stützen sich die Federn an einem Vorsprung des Freilaufkörpers ab, der innerhalb der Aufnahme des Nabenkörpers ausgebildet ist. Beispielsweise ist der Vorsprung durch einen eingesetzten Scheibenring gebildet.

Gemäß einer beispielhaften Ausführungsform der Erfindung weist die erste Lagervorrichtung ein erstes und ein zweites Nabenlager auf, die jeweils an einem der beiden stirnseitigen Bereiche des Nabenkörpers angeordnet sind. Das Nabenlager, das zum Freilaufkörper hin orientiert ist, weist einen inneren Laufring und einen äußeren Laufring auf und die zweite Stirnverzahnung ist einstückig mit dem äußeren Laufring ausgebildet ist.

Gemäß einer möglichen Ausführungsform liegt der innere Laufring an der Nabenachse an, und der äußere Laufring ist drehstarr mit dem Nabenkörper verbunden.

Gemäß einer möglichen Ausführungsform ist die zweite Stirnverzahnung wenigstens in Vorspannrichtung unbeweglich gehalten.

Dadurch, dass nur eine der beiden Stirnverzahnungen schwimmend gelagert ist, lässt sich ein Freilaufmechanismus zur Verfügung stellen, der sowohl hinsichtlich des Bauraumbedarfs als auch hinsichtlich des Gewichts weiter reduziert ist. Außerdem wird eine zuverlässigere Kraftübertragung gewährleistet; mit anderen Worten, die Bauteile lassen sich bei gleicher Kraftübertragung zusätzlich reduzieren.

Gemäß einer möglichen Ausführungsform ist die Nabenachse als Hohlkörperachse mit einem durchgehenden Hohlraum ausgebildet.

Gemäß einer möglichen Ausführungsform weist die Nabenachse eine durchgehende zylindrische Mantelfläche auf. Beispielsweise weist die Nabenachse eine über die gesamte Länge konstante Wandungsstärke auf.

Gemäß einer möglichen Ausführungsform ist der Freilaufkörper zur Aufnahme eines Zahnkranzpakets mit mehreren Zahnkränzen ausgebildet. Die Zahnräder werden, wie bereits erwähnt, auch als Ritzel bezeichnet und ein Zahnkranzpaket als Ritzelpaket oder auch als Kassettenzahnkranz.

Gemäß einer möglichen Ausführungsform weisen die Stirnverzahnungen ein Sägezahnprofil auf, das sich abwechselnd aus flach schräg verlaufenden Zahnflanken und im Wesentlichen parallel zur Nabenachse steil verlaufenden Zahnflanken zusammensetzt. Bei einer Drehbewegung des Freikörpers in Relation zum Nabenkörper in der Kopplungsrichtung liegen die steil verlaufenden Zahnflanken der beiden Stirnverzahnungen aneinander an und gewährleisten durch diese Kopplung eine gute Kraftübertragung. Vorzugsweise verlaufen die steilen Zahnflanken jeweils in einer Ebene parallel zur Nabenachse. Bei einer Drehbewegung des Freilaufkörpers in Relation zum Nabenkörper in der anderen Richtung gleiten die schräg verlaufenden Zahnflanken aneinander entlang und bewegen dabei die Stirnverzahnungen in axialer Richtung so weit voneinander weg, dass die beiden Stirnverzahnungen aneinander vorbei gedreht werden können.

Gemäß einer möglichen Ausführungsform sind die steilen Zahnflanken der Stirnverzahnungen mit einem Hinterschnitt ausgebildet, so dass sich die beiden Verzahnungen bei Kraftübertragung zusammenziehen. Dadurch wird gewährleistet, dass auch bei einer Verrastung über die halbe Tiefe eine sichere Kraftübertragung möglich ist, da sich die beiden Verzahnungen durch Aufbringen der Kraft zusammenziehen, um eine vollständige Verrastung sicherzustellen.

Gemäß einer möglichen Ausführungsform ist die zweite Stirnverzahnung auf einem zweiten Scheibenkörper ausgebildet, der am Nabenkörper unbeweglich gehalten ist.

Gemäß einer möglichen Ausführungsform kann der zweite Scheibenkörper in eine Aufnahmeöffnung des Nabenkörpers eingesetzt sein und weist wenigstens einen Vorsprung auf, der derart in eine Ausnehmung des Nabenkörpers eingreift, dass der zweite Scheibenkörper drehstarr mit dem Nabenkörper verbunden ist.

Der in die Ausnehmung eingreifende Vorsprung, bei dem es sich beispielsweise um eine in Umfangsrichtung gleichmäßig ausgebildete Verzahnung handeln kann, gewährleistet eine zuverlässige Kraftübertragung.

Gemäß einer möglichen Ausführungsform ist der erste Scheibenkörper in einer sich in axialer Richtung erstreckenden Aufnahmeöffnung des Freilaufkörpers eingesetzt, wobei der erste Scheibenkörper derart mit Vorsprüngen in sich axial erstreckende Ausnehmungen des Freilaufkörpers eingreift, dass der erste Scheibenkörper drehstarr mit dem Freilaufkörper verbunden ist.

Gemäß einer möglichen Ausführungsform weist der erste Scheibenkörper eine Vielzahl von radialen Vorsprüngen auf, und die Ausnehmungen des Freilaufkörpers sind als eine zu den radialen Vorsprüngen passende Rillenstruktur ausgebildet.

Gemäß einer möglichen Ausführungsformist die Aufnahmeöffnung des Freilaufkörpers in axialer Richtung breiter als die axiale Breite des ersten Scheibenkörpers.

Gemäß einer möglichen Ausführungsform weist der erste Scheibenkörper in axialer Richtung eine Breite auf, die größer ist als eine Breite des zweiten Scheibenkörpers.

Gemäß einer möglichen Ausführungsform weist die Aufnahmeöffnung des Freilaufkörpers in axialer Richtung eine größere Breite auf als die Aufnahmeöffnung des Nabenkörpers.

Gemäß einer möglichen Ausführungsform sind die erste und die zweite Lageraufnahme im Nabenkörper jeweils als ein sich axial erstreckender zylindrischer Hohlraum ausgebildet, der auf der einen Stirnseite über den gesamten Querschnitt offen ist, zum Einsetzen der Lager, und auf der anderen Seite durch einen Absatz als der axiale Anschlag für die Lager begrenzt ist. Die zweite Lageraufnahme ist im zweiten stirnseitigen Bereich des Nabenkörpers angeordnet. Die Aufnahmeöffnung im Nabenkörper zur Aufnahme des zweiten Scheibenkörpers geht dabei in die zweite Lageraufnahme über, wobei das zweite Nabenlager über die Aufnahmeöffnung in die Lageraufnahme einsetzbar ist.

Gemäß einer möglichen Ausführungsform ist der Außendurchmesser des zweiten Nabenlagers kleiner als der minimale Außendurchmesser des zweiten Scheibenkörpers, d.h. der Außendurchmesser des zweiten Nabenlagers ist kleiner als die lichte Weite der Aufnahmeöffnung im Nabenkörper.

Erfindungsgemäß ist auch ein Laufrad für ein Fahrrad vorgesehen mit einer Felge, einer Nabe und einem Speichenkörper, wobei der Speichenkörper die Felge mit der Nabe verbindet. Die Nabe ist als Hinterradnabe nach einer der vorhergehenden Ausführungsbeispiele ausgebildet.

Der Begriff "Speichenkörper" bezieht sich auf die Ausbildung von mehreren, sich teilweise überkreuzenden Speichen, die lediglich auf Zug belastet werden können. Der Begriff Speichenkörper bezieht sich aber auch auf solche Ausführungsformen, bei denen zwischen der Felge und der Nabe nur wenige, beispielsweise drei oder fünf, Verbindungen vorgesehen sind, die auch auf Druck belastet werden können. Der Begriff Felge bezieht sich auf denjenigen umlaufenden Bereich, auf dem der Mantel bzw. der Schlauch angebracht werden.

Die Erfindung umfasst auch ein Fahrrad mit einem Rahmen, einem vorderen Laufrad und einem hinteren Laufrad, wobei das hintere Laufrad als Laufrad nach dem vorhergehenden Ausführungsbeispiel ausgebildet ist.

Weiterhin ist beispielsweise vorgesehen, die axial einseitige Halterung der Nabenlager, und z.B. auch der Freilauflager, zusammen mit zwei Lagereinheiten pro Nabenlager vorzusehen, bei denen ein Lager gegen einen Distanzring ausgetauscht werden kann, um eine maximale Gewichtsreduzierung bei der Lagerausbildung zu gewährleisten. Die einseitige Halterung unterstützt dabei ein Austauschen eines Lagers gegen einen Distanzring, da die einzelnen Teile durch Aufschieben auf die Achse zusammengefügt werden. Der entsprechende spielfreie und kraftschlüssige Sitz ergibt sich dann beispielsweise durch das Aufsetzen der Endkappen, evtl. mit Ausgleichselementen.

Weiterhin ist beispielsweise vorgesehen, die Stirnverzahnung auf dem eingeschraubten Scheibenkörper mit dem gleichmäßigen Andrücken des ersten Scheibenkörpers zu kombinieren, um einen möglichst flachen Aufbau zur Verfügung zu stellen, damit z.B. die Nabenlager möglichst weit außen positioniert werden können.

Weiterhin kann beispielsweise auch vorgesehen sein, die Stirnverzahnung auf dem eingeschraubten Scheibenkörper mit der einstückigen Ausbildung des äußeren Laufrings des Nabenlagers mit der zweiten Stirnverzahnung auszubilden, um den Aufbau in axialer Richtung noch weiter zu minimieren. Dies kann auch in Kombination mit dem gleichmäßigen Andrücken des ersten Scheibenkörpers erfolgen.

Durch das Reduzieren der axialen Dicke des Aufbaus der Stirnverzahnung wird z.B. in vorteilhafter Weise Bauraum zur Verfügung gestellt, der für das Ausbilden von zwei Lagereinheiten, bzw. eine Lagereinheit und ein Distanzring, genutzt werden kann.

Zum Erreichen eines möglichst geringen Gewichts ist vorgesehen, die axial einseitige Halterung der Nabenlager mit der Distanzeinheit, mit der eingeschraubten Stirnverzahnung, mit dem elastischen Körper, der gleichmäßig auf den dünner auszubildenden Scheinkörper einwirkt, und mit der einstückigen Ausbildung des äußeren Laufrings des Nabenlagers mit der zweiten Stirnverzahnung zu kombinieren. Diese Kombination stellt eine Hinterradnabe zur Verfügung, die sich aufgrund des reduzierten Gewichts und der dennoch vorhandenen zuverlässigen Kraftübertragung insbesondere für professionelle und semiprofessionelle Wettkampfeinsätze eignet.

Diese und andere Aspekte werden durch die Bezugnahme auf die hiernach beschriebenen Ausführungsformen erläutert und verdeutlicht.

### KURZE BESCHREIBUNG DER ZEICHNUNGEN

Nachfolgend wird die Erfindung zur weiteren Erläuterung und zum besseren Verständnis anhand von Ausführungsbeispielen unter Bezugnahme auf die beigefügten Zeichnungen näher erläutert. Es zeigen:
Fig. 1 ein Fahrrad gemäß einem Ausführungsbeispiel der Erfindung in einer Seitenansicht;
Fig. 2 einen schematischen Längsschnitt durch eine Hinterradnabe gemäß der Erfindung entlang der Drehachse;
Fig. 3 eine Explosionsdarstellung der Hinterradnabe nach Fig. 2 in einer Draufsicht;
Fig. 4 eine perspektivische Darstellung der Explosionsdarstellung nach Fig. 3;
Fig. 5 eine weitere Explosionsdarstellung aus einer anderen Blickrichtung;
Fig. 6 einen vergrößerten Ausschnitt der Schnittdarstellung nach Fig. 2;
Fig. 7 eine erste Ausführungsform einer Freilaufeinrichtung mit einer Stirnverzahnung;
Fig. 8 eine Freilaufeinrichtung ;
Fig. 9 ein Ausführungsbeispiel einer Vorspanneinrichtung;
Fig. 10 eine weitere Ausführungsform für eine Freilaufeinrichtung;
Fig. 11 eine weitere Ausführungsform für eine Freilaufeinrichtung;
Fig. 12 einen Schnitt durch eine Freilaufeinrichtung nach Fig. 9;
Fig. 13 eine weitere Ausführungsform einer Freilaufeinrichtung;
Fig. 14 eine weitere Ausführungsform einer Freilaufeinrichtung in einer perspektivischen Explosionsdarstellung;
Fig. 15 einen Ausschnitt einer weiteren Ausführungsform einer Freilaufeinrichtung;
Fig. 16 einen Ausschnitt einer weiteren Ausführungsform einer Freilaufeinrichtung;
Fig. 17 eine weitere Ausführungsform eines Nabenlagers;
Fig. 18 eine weitere Ausführungsform eines Nabenlagers und einer Stirnverzahnung; und
Fig. 19 eine weitere Ausführungsform eines Nabenlagers und einer Stirnverzahnung.

### DETAILLIERTE DARSTELLUNGEN BEISPIELHAFTER AUSFÜHRUNGEN

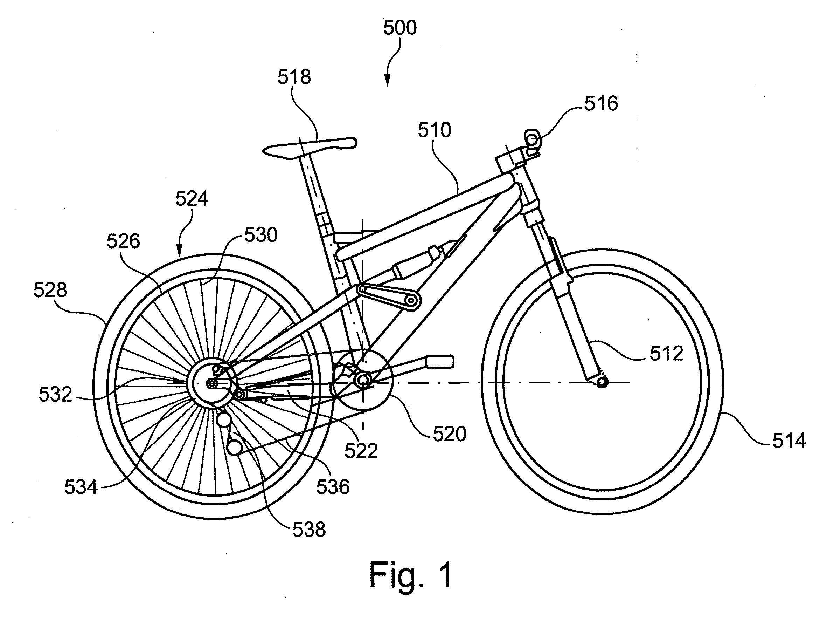

In Fig. 1 ist ein Fahrrad 500 gezeigt mit einem Rahmen 510, der aus verschiedenen Rohren zusammengesetzt ist und eine Gabel 512 zur Aufnahme eines vorderen Laufrads 514 aufweist. Außerdem verfügt das Fahrrad über einen Lenker 516 sowie einen Sattel 518, wobei auf die üblicherweise verwendeten Haltevorrichtungen wie Sattelstütze und Lenkerrohr sowie auch auf Schalt- und Bremseinrichtungen nicht näher eingegangen werden soll. Außerdem ist ein Tretlager 520 angedeutet. An einem hinteren Ausfallende 522 ist eine Aufnahme für ein hinteres Laufrad 524 gemäß der Erfindung vorgesehen. Das hintere Laufrad 524 verfügt über eine Felge 526, auf der eine Bereifung in Form eines Mantels 528 montiert ist. Die Felge 526 ist mittels eines Speichenkörpers 530 mit einer Hinterradnabe 532 gemäß der Erfindung verbunden. Die Hinterradnabe weist einen Zahnkranz, bzw. ein Zahnkranzpaket 534 auf, der mittels einer Kette 536 mit dem Tretlager verbunden und über die Tretbewegung angetrieben wird. Das Zahnkranzpaket 534 weist mehrere Ritzel auf, wobei die Kette 536 mittels eines Schaltwerks 538 auf unterschiedlichen Ritzeln positioniert werden kann. Die erfindungsgemäße Nabe 532 weist einen Freilaufmechanismus und Lagervorrichtungen auf, die anhand der folgenden Figurenbeschreibungen näher erläutert werden.

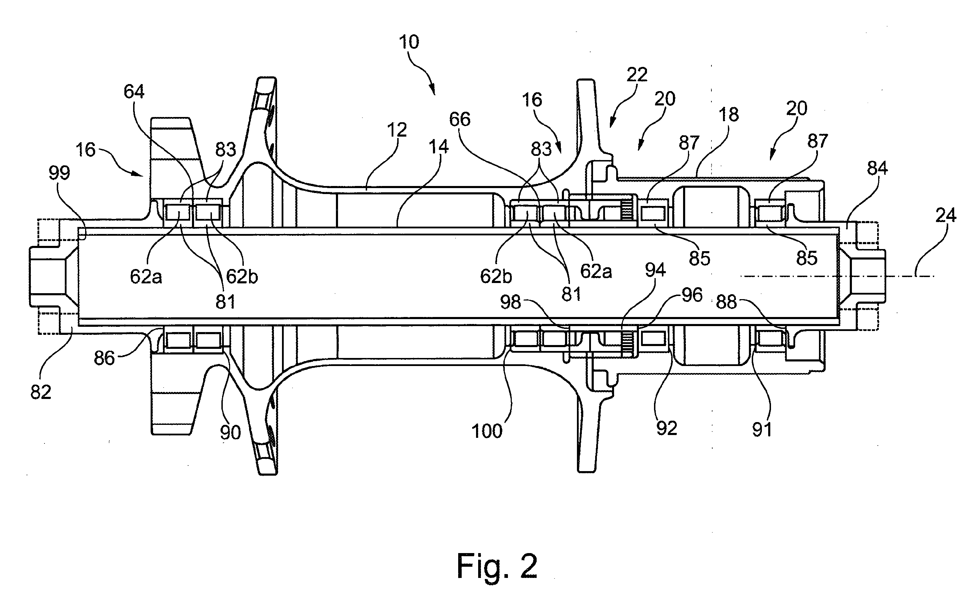

In Fig. 2 ist in einer Schnittdarstellung eine erfindungsgemäße Nabe 10 gezeigt, die der Nabe 532 aus Fig. 1 entspricht. Die Hinterradnabe 10 weist einen Nabenkörper 12, einen Achskörper 14, eine erste Lagervorrichtung 16, einen Freilaufkörper 18 zur Aufnahme wenigstens eines Zahnrads, beispielsweise des Zahnkranzpakets 534 aus Fig. 1, eine zweite Lagervorrichtung 20 und eine Freilaufeinrichtung 22 auf.

Die erste Lagervorrichtung 16 ist derart zwischen dem Achskörper 14 und dem Nabenkörper 12 angeordnet, dass der Nabenkörper in Relation zum Achskörper um eine Drehachse 24 drehbar gehalten ist. Der Nabenkörper 12 ist also mittels der ersten Lagervorrichtung 16 an dem Achskörper 14 drehbar gelagert.

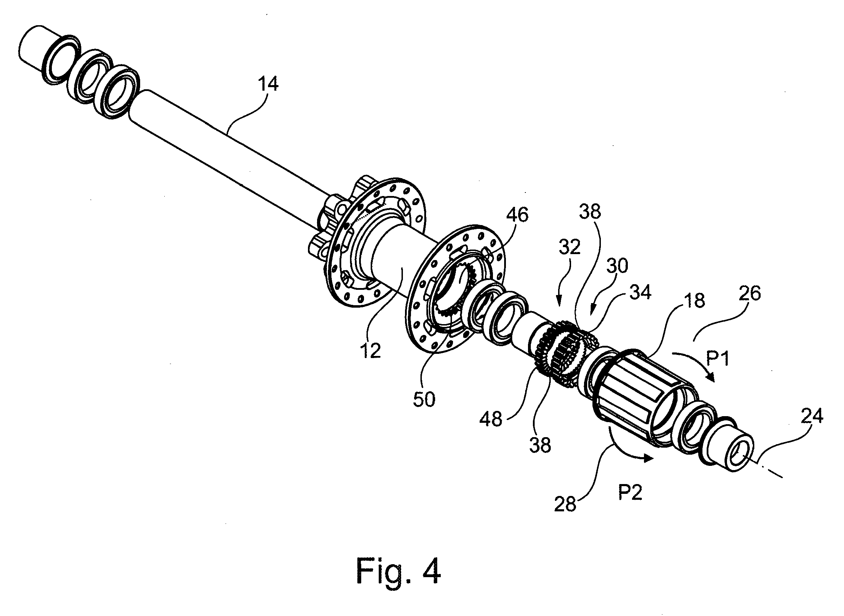

Die Freilaufeinrichtung 22 ist zwischen dem Freilaufkörper 18 und dem Nabenkörper 12 angeordnet und bewirkt in einer ersten Drehrichtung 26 (in Fig. 4 durch einen ersten Pfeil P 1 angedeutet) um die Drehachse 24 eine Kopplung zwischen dem Freilaufkörper 18 und dem Nabenkörper 12. Weiter ist der Freilaufkörper 18 in einer zweiten Drehrichtung 28 (in Fig. 4 dargestellt durch einen zweiten Pfeil P2) gegenüber dem Nabenkörper 12 frei drehbar.

Dadurch lässt sich mittels eines Zahnkranzes, beispielsweise ein Ritzel des Zahnkranzpakets 534 aus Fig. 1, durch eine vorwärts gerichtete Tretbewegung eine Kraft auf das Laufrad anbringen und das Fahrrad somit antreiben. In der entgegengesetzten Richtung, d.h. bei einer rückwärts gerichteten Tretbewegung, lässt sich der Zahnkranz gegenüber dem Laufrad frei bewegen. Dadurch ist es auch möglich, dass das Fahrrad vorwärts rollt, ohne dass damit eine Drehbewegung des Laufrads über den Zahnkranz und damit auch auf die Kette auf das Tretlager übertragen wird, was eine Kurbelbewegung der Tretkurbeln und der daran angeordneten Pedale bewirken würde.

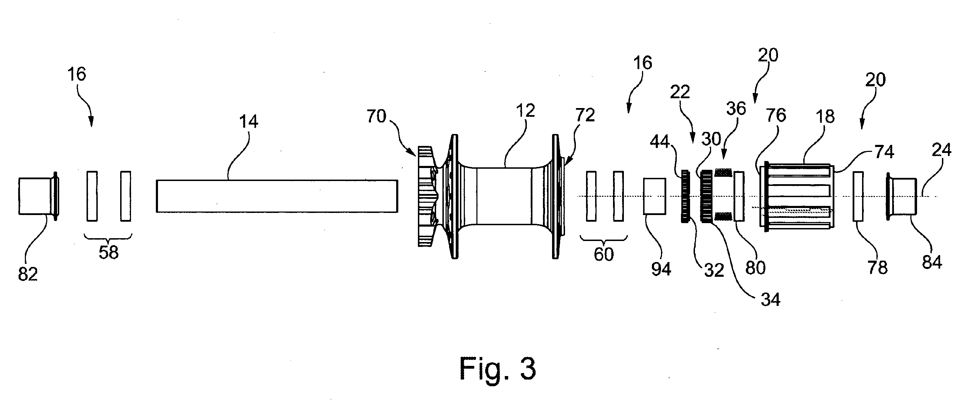

In Fig. 3 ist zum besseren Verständnis die Hinterradnabe 10 aus Fig. 2 in einer Explosionszeichnung in einer Draufsicht gezeigt, aus der die einzelnen Komponenten besser ablesbar sind. Auf einige der Komponenten wird im weiteren Verlauf eingegangen, wobei die Bezugszeichen bereits in Fig. 3 verwendet werden.

In Fig. 4 ist eine Explosionsdarstellung in einer perspektivischen Ansicht gezeigt.

Die Freilaufeinrichtung 22 weist eine erste Stirnverzahnung 30 und eine zweite Stirnverzahnung 32 auf, die einander zugewandt sind und von denen die eine in Bezug zum Nabenkörper 12 und die andere in Bezug zum Freilaufkörper 18 drehstarr ausgebildet ist.

Die erste Stirnverzahnung 30 ist auf einem ersten Scheibenkörper 34 ausgebildet, der in Bezug zur Drehachse 24 schwimmend gehalten ist und durch eine Vorspanneinrichtung 36 in Richtung der zweiten Stirnverzahnung 32 gedrängt wird.

Die zweite Stirnverzahnung 32 ist im eingebauten Zustand, d.h. in der fertig montierten Hinterradnabe 10, wenigstens in Vorspannrichtung unbeweglich gehalten. Die zweite Stirnverzahnung 32 ist also im Gegensatz zur ersten Stirnverzahnung 30 nicht schwimmend gehalten in Bezug zur Drehachse.

Gemäß einer nicht gezeigten Ausführungsvariante ist auch die zweite Stirnverzahnung auf einem Scheibenkörper ausgebildet und in Bezug zur Drehachse schwimmend gehalten und wird durch eine weitere Vorspanneinrichtung, die beispielsweise einen elastischen Ringkörper aufweist (nicht gezeigt), in Richtung der ersten Stirnverzahnung gedrängt.

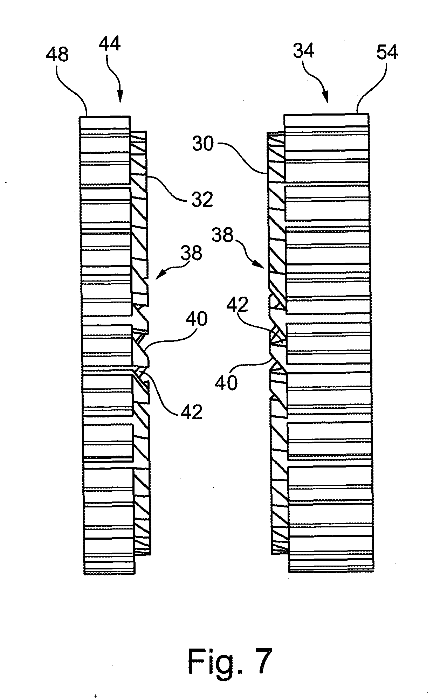

Die Stirnverzahnungen 30, 32 weisen ein Sägezahnprofil 38 auf, das aus abwechselnd angeordneten flach schräg verlaufenden ersten Zahnflanken 40 und parallel zur Nabenachse 24 steil verlaufenden zweiten Zahnflanken 42 zusammengesetzt ist, was anhand der Fig. 7 besser erkennbar ist. Bei einer Drehbewegung des Freilaufkörpers 18 in Relation zum Nabenkörper 12 in der Kopplungsrichtung, d.h. der ersten Drehrichtung 26, liegen die steil verlaufenden zweiten Zahnflanken 42 der beiden Stirnverzahnungen 30, 32 aneinander an und gewährleisten durch diese Kopplung eine zuverlässige Kraftübertragung auch für hohe Drehmomente.

Bei einer Drehbewegung des Freilaufkörpers 18 in Relation zum Nabenkörper 12 in der anderen Richtung, d.h. in der zweiten Drehrichtung 28, gleiten die schräg verlaufenden ersten Zahnflanken 40 aneinander entlang und bewegen die Stirnverzahnungen 30, 32 in axialer Richtung, d.h. in Richtung parallel der Drehachse 24, so weit voneinander weg, dass die beiden Stirnverzahnungen 30, 32 aneinander vorbeigedreht werden können, da sich die Zahnflanken nicht mehr in Eingriff miteinander befinden.

Da gemäß einem Ausführungsbeispiel die zweite Stirnverzahnung in Vorspannrichtung unbeweglich gehalten ist, erfolgt ein axialer Versatz bzw. ein axiales Verschieben nur durch die erste Stirnverzahnung 30 auf dem ersten Scheibenkörper 34. Die Vorspannrichtung verläuft parallel zur Drehachse 24 und ist in Fig. 4 nach links oben gerichtet. Mit anderen Worten, die Vorspanneinrichtung 36, die in Fig. 4 nicht dargestellt ist, drückt den ersten Scheibenkörper 34 bei Betrachtung der Fig. 4 im Querformat nach schräg links oben parallel zur Drehachse 24 gegen die zweite Stirnverzahnung 32, die in Bezug zur Drehachse 24 durch ein Widerlager gehalten ist.

Gemäß einem Ausführungsbeispiel, das in Fig. 4 gezeigt ist, ist die zweite Stirnverzahnung 32 auf einem zweiten Scheibenkörper 44 ausgebildet, der am Nabenkörper in Richtung der Vorspanneinrichtung unbeweglich gehalten ist.

Beispielsweise ist der zweite Scheibenkörper 44 in einer Aufnahmeöffnung 46 des Nabenkörpers 12 eingesetzt und weist wenigstens einen Vorsprung auf, der derart in eine Ausnehmung des Nabenkörpers eingreift, dass der zweite Scheibenkörper 44 drehstarr mit dem Nabenkörper verbunden ist.

Gemäß einem Ausführungsbeispiel ist der wenigstens eine Vorsprung als eine Vielzahl von gleichmäßig ausgebildeten radialen Vorsprüngen in Form einer radialen Zahnstruktur 48 ausgebildet und die Ausnehmung des Nabenkörpers ist als eine zu den radialen Zahnstrukturvorsprüngen 48 passende Rillenstruktur 50 ausgebildet.

Gemäß einer Ausführungsform sind die Vorsprünge regelmäßig ausgebildet, wobei jedoch auch vorgesehen sein kann, dass die radialen Vorsprünge ungleichmäßig ausgebildet sind und in eine dazu passende ungleichmäßige Rillenstruktur eingreifen, so dass der zweite Scheibenkörper stets dieselbe Drehwinkellage in Bezug zur Nabe einnehmen muss.

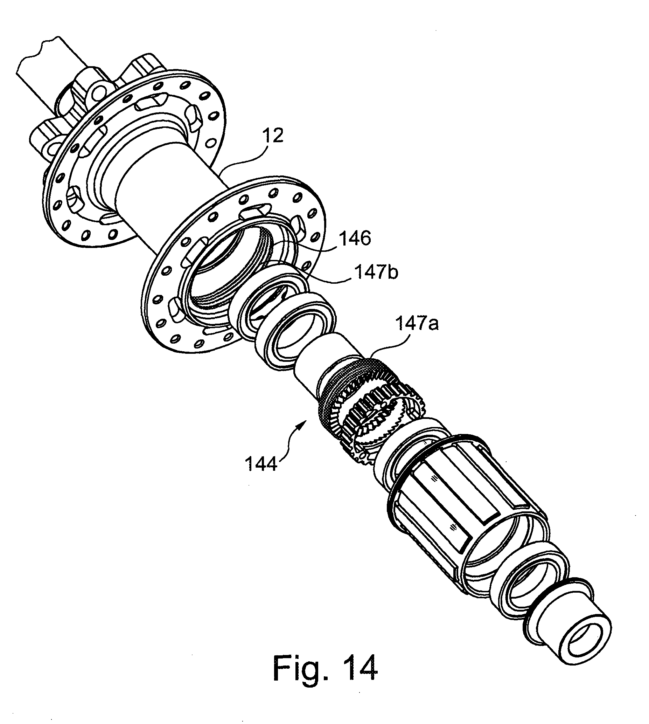

Gemäß einer weiteren Ausführungsform, die in Fig. 14 dargestellt ist, ist der zweite Scheibenkörper, mit Bezugszeichen 144, in eine Aufnahmeöffnung 146 des Nabenkörpers 12 eingeschraubt, wobei die Einschraubrichtung der Kopplungsrichtung entspricht. Dazu weist der zweite Scheibenkörper 144 auf der radialen Umfangsfläche wenigstens teilweise ein radiales Außengewinde 147a auf und die Aufnahmeöffnung 146 auf der inneren radialen Wandungsfläche ein dazu passendes Innengewinde 147b. Bei Aufbringen einer Kraft auf den Zahnkranz und einer Kopplung über die Freilaufeinrichtung 22, d.h. die Stirnverzahnungen, wird der zweite Scheibenkörper 48 derart in die Aufnahmeöffnung 146 eingedreht, dass bei vollständigem Eindrehen, d.h. beim Anliegen an einem dafür vorgesehenen Absatz, eine weitere Drehung ausgeschlossen ist und eine zuverlässige Kraftübertragung erfolgen kann.

Der zweite Scheibenkörper 34 weist wenigstens zwei Ansatzstellen auf zum Ansetzen eines Werkzeugs, um den zweiten Scheibenkörper aus der Aufnahmeöffnung 146 herausschrauben zu können (in Fig. 14 nicht zu sehen).

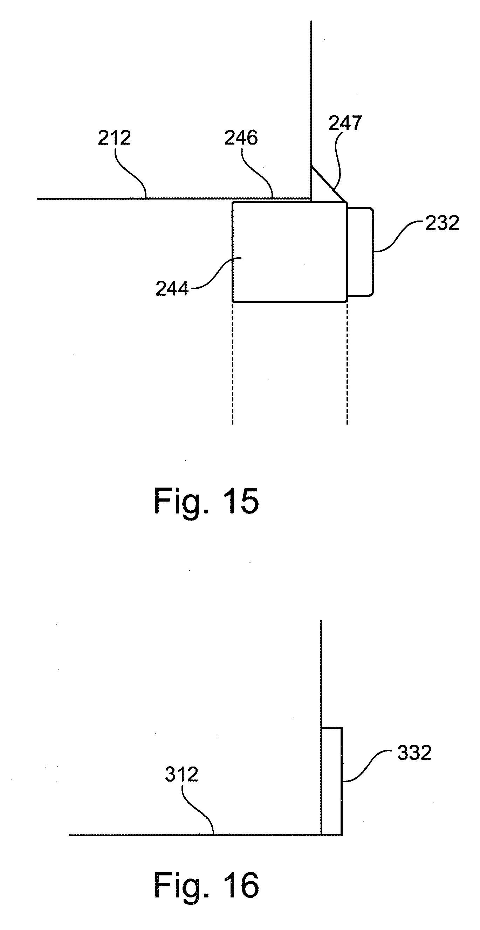

Gemäß einer weiteren Ausführungsform, die in Fig. 15 dargestellt ist, dort im Schnitt gezeigt, ist eine zweite Stirnverzahnung 232 auf einem zweiten Scheibenkörper 244 angeordnet, der mit dem Nabenkörper 212 dauerhaft verbunden ist, zum Beispiel durch Einpressen in eine Aufnahmeöffnung 246 und Verschweißen oder Verkleben mit dem Nabenkörper 212, was durch ein Schweißnahtsymbol 247 in Fig. 15 angedeutet ist. Das Einpressen kann auch ohne Verschweißen oder Verkleben angewendet werden. Ebenso kann der Scheibenkörper 244 mit dem Nabenkörper auch nur verschweißt oder verklebt werden.

Gemäß einer weiteren Ausführungsform, die in Fig. 16 angedeutet ist, ist eine zweite Stirnverzahnung, in Fig. 16 mit dem Bezugszeichen 332 bezeichnet, direkt an dem Nabenkörper 312 ausgebildet, beispielsweise aus einem Stück gefräst oder anderweitig gefertigt.

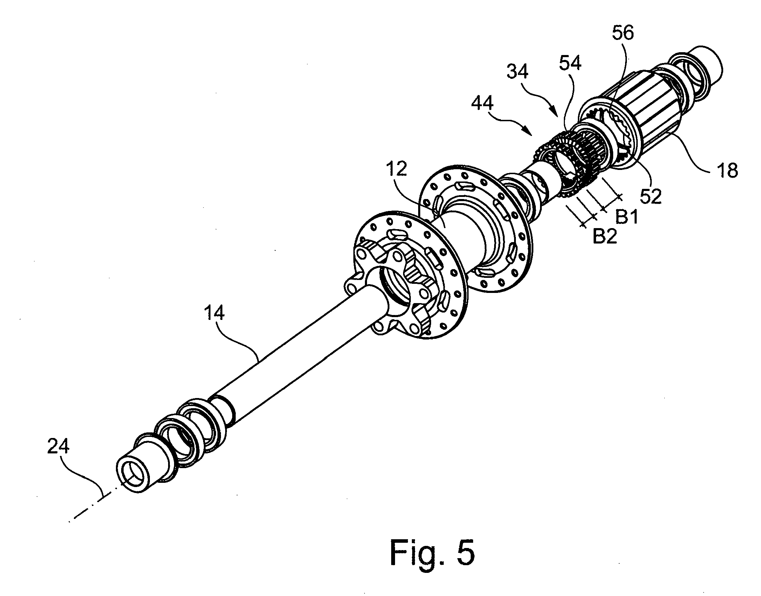

Gemäß einem weiteren Aspekt ist der erste Scheibenkörper 34 in einer sich in axialer Richtung erstreckenden Aufnahmeöffnung 52 des Freilaufkörpers 18 eingesetzt, was in Fig. 5 zu sehen ist, in der eine Explosionszeichnung aus einem anderen Blickwinkel gezeigt ist. Dabei greift der erste Scheibenkörper 34 derart mit Vorsprüngen 54 in sich axial erstreckende Ausnehmungen 56 des Freilaufkörpers 18 ein, dass der erste Scheibenkörper 34 drehstarr mit dem Freilaufkörper 18 verbunden ist. Die Vorsprünge 54 sind als gleichmäßig ausgebildete radiale Verzahnungen ausgebildet, und die Ausnehmungen 56 des Freilaufkörpers 18 sind als eine zu den radialen Vorsprüngen passende Rillenstruktur ausgebildet. Die Vorsprünge 54 und die Ausnehmungen 56 können auch ungleichmäßig ausgebildet sein, um beispielsweise eine bestimmte Drehwinkellage des ersten Scheibenkörpers in Bezug zum Freilaufkörper 18 zu gewährleisten.

Um ein axiales Bewegungsspiel des ersten Scheibenkörpers 34 sicherzustellen, d.h. um die schwimmende Lagerung in Bezug zur Drehachse 24 zu gewährleisten, ist die Aufnahmeöffnung 52 des Freilaufkörpers 18 in axialer Richtung, d.h. in Richtung parallel zur Drehachse 24 breiter als eine axiale Breite B1 des ersten Scheibenkörpers 34.

Wie aus Fig. 5 ersichtlich, kann der erste Scheibenkörper 34 in axialer Richtung eine axiale Breite B1, aufweisen, die größer ist als eine axiale Breite B2 des zweiten Scheibenkörpers 44. Dies ist dadurch bedingt, dass der zweite Scheibenkörper 44 in dem gezeigten Ausführungsbeispiel nicht schwimmend gehalten ist und die radial angeordnete außen liegende Zahnstruktur nur eine Kraftübertragung in einer festgelegten Position gewährleisten muss, währenddessen die schwimmend gelagerte erste Stirnverzahnung 30 stets auch ein gewisses Verkippen des ersten Scheibenkörpers 34 bedeutet. Dadurch, dass der zweite Scheibenkörper 44 als nicht schwimmend ausgebildet ist, sondern fest in der Vorspannrichtung unbeweglich gehalten ist, kann es bei dem zweiten Scheibenkörper 44 zu keiner Verkippung kommen, und somit lässt sich der zweite Scheibenkörper 44 mit einer verringerten Breite ausführen, was gleichzeitig eine Gewichtsreduzierung bedeutet. Die Aufnahmeöffnung 52 des Freilaufkörpers weist daher in axialer Richtung eine größere Breite auf als die Aufnahmeöffnung des Nabenkörpers (in Fig. 5 ist letztere nicht zu sehen).

Gemäß einem weiteren Aspekt der Erfindung weist die erste Lagervorrichtung 16 ein erstes Nabenlager 58 und ein zweites Nabenlager 60 auf, wobei auf die nähere Ausführung der beiden Nabenlager noch eingegangen wird.

Gemäß einem weiteren Aspekt der Erfindung weisen das erste Nabenlager 58 und das zweite Nabenlager 60 jeweils zwei Lagereinheiten 62a, 62b auf, und der Nabenkörper 12 weist für das erste und das zweite Nabenlager 58, 60 eine erste Lageraufnahme 64 und eine zweite Lageraufnahme 66 auf, die jeweils zur Aufnahme der zwei Lagereinheiten 62a, 62b ausgebildet sind. Die zwei Lagereinheiten 62a, 62b sind vorzugsweise baugleich.

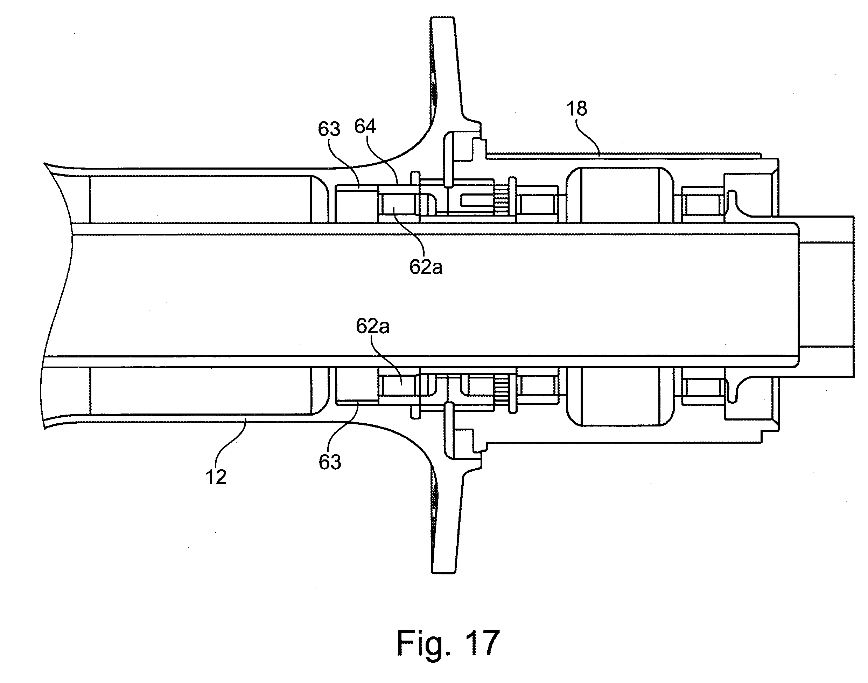

Gemäß einer Ausführungsform ist pro Nabenlager eine der zwei Lagereinheiten gegen einen Distanzeinsatz 63 (in Fig. 17 gezeigt) austauschbar. Um ein möglichst günstiges Hebelverhältnis, bezogen auf die Krafteinleitung in den Achskörper 12, zu gewährleisten, ist jeweils die zur Nabenmitte hin liegende Lagereinheit austauschbar.

Damit kann ein Laufrad zur Verfügung gestellt werden, bei dem die Lager an unterschiedliche Einsatzzwecke angepasst werden können.

Bereits mit der erfindungsgemäßen Ausbildung von zwei Lagereinheiten pro Nabenlager ist eine deutliche Gewichtsreduzierung möglich, da die beiden Lagereinheiten wesentlich kleiner und damit leichter ausgebildet werden können, bei gleicher Belastbarkeit im Vergleich zu den bisher üblichen einfachen Lagereinheiten. Damit lassen sich Hinterradnaben insbesondere für Laufräder zur Verfügung stellen, die im Mountainbike-Bereich auch für die extrem harten Bedingungen von Downhill-Abfahrten eingesetzt werden können.

Durch die Austauschbarkeit gegen den Distanzeinsatz 63 kann das Laufrad im Gewicht weiter reduziert werden, wenn das Laufrad bzw. die Nabenlager nicht einer so hohen Belastbarkeit ausgesetzt sind. Beispielsweise können leichtere Fahrer eine der Lagereinheiten pro Nabenlager gegen den Distanzeinsatz austauschen, da bereits eine Lagereinheit für das geringere Körpergewicht ausreicht.

Ebenso ist es möglich, dass normalgewichtige Fahrer für einen reinen Straßeneinsatz oder einem Fahren auf recht ebenem Untergrund eine Lagereinheit ausbauen, um die Nabe im Gewicht weiter reduzieren zu können.

Um dem Bedarf nach weiteren Gewichtsreduzierungsmöglichkeiten gerecht zu werden, wird außerdem den sehr ambitionierten Mountainbike-Fahrern die Möglichkeit gegeben, auch für höhere Belastungen nur eine Lagereinheit zu verwenden, wobei dann jedoch ein stärkerer Verschleiß zu erwarten ist. Beispielsweise lässt sich durchaus ein Rennen mit nur einer Lagereinheit bestreiten, wobei dann das eigentlich zu stark belastete Lager nach dem Rennen ersetzt wird.

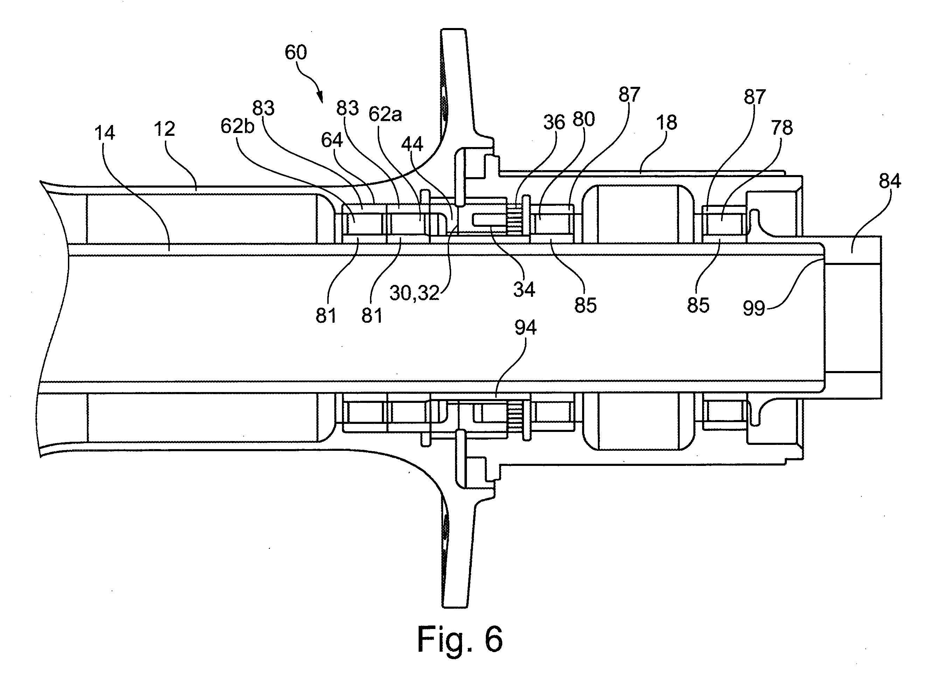

Wie aus Fig. 2 und auch Fig. 6 zu erkennen ist, ist die erste und die zweite Lageraufnahme im Nabenkörper 12 jeweils als ein sich axial erstreckender zylindrischer Hohlraum 66 ausgebildet, der auf der einen Stirnseite über die gesamte Querschnittsfläche offen ist zum Einsetzen der Lager, d.h. der in Fig. 6 im Querformat des Blattes auf der rechten Seite offen ist. Auf der anderen Seite ist der zylindrische Hohlraum mit einem Absatz 70 als axialer Anschlag für die Lager begrenzt.

Diese Ausführungsmerkmale sind für die beiden Nabenlager, d.h. auf beiden Seiten der Nabe, ähnlich ausgeführt, wobei auf die Darstellung des gegenüberliegenden Lagers in Fig. 6 verzichtet wird.

Mit Bezug auf Fig. 2 weist der Nabenkörper 12 einen ersten stirnseitigen Bereich 70 und einen zweiten stirnseitigen Bereich 72 auf, wobei der zweite stirnseitige Bereich zum Freilaufkörper 18 hin orientiert ist. Der Freilaufkörper 18 weist einen ersten stirnseitigen Bereich 74 und einen zweiten stirnseitigen Bereich 76 auf, wobei der zweite stirnseitige Bereich 76 zum Freilaufkörper 18 hin orientiert ist.

Die zweite Lagervorrichtung 20 weist ein erstes Freilauflager 78 und ein zweites Freilauflager 80 auf, wobei das erste Freilauflager im Bereich des ersten stirnseitigen Bereichs 74 angeordnet ist und das zweite Freilauflager 80 im Bereich des zweiten stirnseitigen Bereichs 76.

Das erste Nabenlager 58 ist im ersten stirnseitigen Bereich 70 des Nabenkörpers 12 angeordnet und das zweite Nabenlager 60 im Bereich des zweiten stirnseitigen Bereichs 72 des Nabenkörpers 12.

Der Achskörper 14 weist eine erste Endkappe 82 und eine zweite Endkappe 84 auf, wobei die zweite Endkappe auf der Seite des Freilaufmechanismus, d.h. der Zahnkranzseite, angeordnet ist und die erste Endkappe am gegenüberliegenden anderen Ende der Achse.

Die erste Endkappe 82 dient als erster axialer Anschlag 86 für das erste Nabenlager 58, und die zweite Endkappe 84 dient als zweiter axialer Anschlag 88 für das erste Freilauflager 78. In der anderen Richtung ist für das erste Nabenlager 58 an dem Nabenkörper ein erster axialer Nabenanschlag 90 vorgesehen.

Das erste und das zweite Nabenlager 58, 60 weisen jeweils einen Innenring 81 und einen Außenring 83 auf. Beispielsweise ist jedes Nabenlager mit dem Innenring 81 axial in einer ersten Halterichtung in Bezug zur Nabenachse einseitig gehalten. Beispielsweise ist jedes Nabenlager mit dem Außenring 83 in einer zweiten Halterichtung, die der ersten Halterichtung entgegengesetzt ist, in Bezug zum Nabenkörper einseitig gehalten. Die erste Halterichtung des zweiten Nabenlagers verläuft entgegengesetzt zur ersten Halterichtung des ersten Nabenlagers.

Der Begriff "Innenring" bezeichnet den inneren Laufring bzw. die innere Lauffläche des jeweiligen Lagers und der "Außenring" den äußeren Laufring bzw. die äußere Lauffläche des Lagers. Der Begriff "einseitige Halterung" bezieht sich auf das Halten in einer Richtung, d.h. bei einer einseitigen Halterung ist in der einen Richtung ein Halt vorgesehen, während in der anderen Richtung eine Bewegung möglich ist.

In Fig. 6 ist das Richtung Freilauf angeordnete Nabenlager am Außenring 83 von links durch einen Anschlag am Nabenkörper gehalten und rechts am Innenring 81 durch eine Hülse 94.

Es sei darauf hingewiesen, dass in Fig. 6 außerdem noch der Aspekt eines zweiteiligen Nabenlagers gezeigt ist, der jedoch nicht zwingend mit dem einseitigen Anschlagskonzept der Lager verwendet werden muss.

Das erste und das zweite Freilauflager 78, 80 weisen ebenfalls jeweils einen Innenring 85 und einen Außenring 87 auf. Beispielsweise ist jedes Freilauflager mit dem Innenring 85 axial in einer ersten Halterichtung in Bezug zur Nabenachse einseitig gehalten. Beispielsweise ist jedes Freilauflager mit dem Außenring 87 in einer zweiten Halterichtung, die der ersten Halterichtung entgegengesetzt ist, in Bezug zum Nabenkörper einseitig gehalten. Die erste Halterichtung des zweiten Freilauflagers verläuft entgegengesetzt zur ersten Halterichtung des ersten Freilauflagers.

In Fig. 6 ist das Richtung Nabenkörper angeordnete Freilauflager am Innenring 85 von links durch die Hülse 94 gehalten und rechts am Außenring 87 durch einen Anschlag des Freilaufkörpers. Das andere, also rechte Freilauflager ist am Außenring 87 von links durch einen Anschlag am Freilaufkörpers gehalten und rechts am Innenring 85 durch die Endkappe 84.

Für das erste Freilauflager 78 ist an dem Freilaufkörper 18 ein erster axialer Freilaufanschlag 91 vorgesehen, der das Freilauflager in Ergänzung zur zweiten Endkappe 84 in der anderen Richtung hält. Für das zweite Freilauflager 80 ist an dem Freilaufkörper 18 ein zweiter axialer Freilaufanschlag 92 vorgesehen, der in der entgegengesetzten Richtung des ersten axialen Freilaufanschlags 91 an dem Freilaufkörper 18 wirkt. Das zweite Freilauflager 80 wird in der zum zweiten Freilaufanschlag 92 entgegengesetzten Richtung am innenliegenden Bereich, d.h. im Bereich des Achskörpers 14 durch die Hülse 94 gehalten, die zwischen dem zweiten Freilauflager 80 und dem zweiten Nabenlager 60 vorgesehen ist, wobei die Hülse 94 für beide Lager, d.h. das zweite Freilauflager und das zweite Nabenlager, als axialer Anschlag in entgegengesetzten Richtungen wirkt, d.h. die Hülse 94 bildet einen ersten Hülsenanschlag 96 für das zweite Freilauflager und einen zweiten Hülsenanschlag 98 als axialer Anschlag für das zweite Nabenlager 60. In der anderen Richtung wird das zweite Nabenlager 60 durch einen zweiten Nabenanschlag 100 gehalten, der an dem Nabenkörper 12 ausgebildet ist.

Diese Konstruktion erlaubt es, die beiden Nabenlager für den Zusammenbau der Hinterradnabe auf den Achskörper 14 aufzuschieben, da dieser mit einer durchgehenden Mantelfläche ausgebildet ist, d.h. keinerlei Absätze aufweist.

Gemäß der Erfindung sind die Endkappen auf die Enden der Nabenachse aufgesetzt und liegen an ihrer Innenseite 99 derart an dem stirnseitigen Ende der Nabenachse an, dass in montiertem Zustand eine in axialer Richtung auf die Hinterradnabe wirkende Einspannkraft von den Endkappen über den Achskörper übertragbar ist.

Zwischen den Innenseiten 99 und den Stirnseiten des Achskörpers 14 kann ein nicht näher gezeigtes Ausgleichselement vorgesehen sein, um positive Ungenauigkeiten bei der Lagerhalterung auszugleichen. Zum Ausgleichen negativer Ungenauigkeiten kann ein Ausgleichselement (nicht näher gezeigt) zwischen den inneren Laufringen derjenigen Naben- und Freilaulager, die im Bereich der Enden des Achskörpers angeordnet sind, vorgesehen sein.

Die Halterung der Lagerung in axialer Richtung erfolgt also über die erste Endkappe 82, die den ersten axialen Anschlag 86 bildet über das erste Nabenlager 58, das auf der anderen Seite durch den am Nabenkörper 12 als Absatz ausgebildeten dritten Anschlag gehalten wird. Über den Nabenkörper erfolgt eine Weiterleitung der Haltekraft an den achten axialen Anschlag 100, der das zweite Nabenlager 60 auf der einen Seite hält, wobei das zweite Nabenlager auf der gegenüberliegenden Seite durch den siebten axialen Anschlag 98, der an der Hülse 94 ausgebildet ist, gehalten wird. Die Hülse 94 überträgt die Haltekraft an den sechsten axialen Anschlag 96, der das zweite Freilauflager 80 an der einen Seite hält, wobei das zweite Freilauflager 80 an der gegenüberliegenden Seite von dem fünften axialen Anschlag, der als innen liegender Absatz an dem Freilaufkörper 18 ausgebildet ist, gehalten wird. Der Freilaufkörper 18 überträgt bzw. leitet die Haltekraft weiter an den vierten axialen Anschlag 90, der das erste Freilauflager 78 auf der einen Seite hält. Auf der anderen Seite wird das erste Freilauflager 78 von dem zweiten axialen Anschlag 88 gehalten, der von der zweiten Endkappe 84 gebildet wird.

Da beide Endkappen an ihren Innenseiten 99 jeweils an den stirnseitigen Enden der Achse aufliegen, erfordert diese schwimmende Halterung bezüglich des Achskörpers selber eine hohe Präzision bzw. sehr geringe Toleranz bei der Herstellung der einzelnen Komponenten. Eine entsprechend genaue Fertigung vorausgesetzt, ist somit ein spielfreies Halten der einzelnen Komponenten möglich, oder mit anderen Worten, die Lager werden mit einer exakt definierten Haltekraft in axialer Richtung gehalten.

Sollte es dennoch zu Ungenauigkeiten kommen, d.h. zur Notwendigkeit Toleranzen aufzunehmen, können Ausgleichselemente vorgesehen sein. Bereits bei der Montage bzw. Fertigung können Ungenauigkeiten entdeckt werden, da es beim Aufsetzen der Endkappen entweder zu einem leicht detektierbaren Spiel kommt, wenn eine oder mehrere der Komponenten ein zu geringes Längenmaß bezüglich der Drehachse 24 aufweisen; oder es kommt zu einem schwergängigen Drehen des Nabenkörpers um den Achskörper, wenn eine oder mehrere Komponenten ein zu großes Längenmaß bezüglich der Drehachse 24 aufweisen, da die Lager innen und außen jeweils nur in einer, d.h. in entgegengesetzter Richtung gehalten sind. Wenn beispielsweise die Absätze an dem Nabenkörper zu weit auseinander liegen, würden die beiden Nabenlager axial verspannt werden, da der innere Laufring nach der Mitte hin und der äußere Laufring nach außen hin vorgespannt wären, was insbesondere bei einem Rillenkugellager zu einem spürbar größeren Reibungswiderstand führt.

Ungenauigkeiten bei der Herstellung und bei dem Zusammenbau können damit an der fertig montierten Nabe leicht detektiert werden, so dass bereits im Werk ein Ausgleich mit Ausgleichselementen, z.B. Ausgleichsscheiben oder auch ein Austausch der Komponenten vorgenommen werden kann, bzw. eine Aussortierung stattfinden kann. Bei bisher üblichen Konstruktionen, bei denen sich die Ungenauigkeiten nicht so leicht detektieren lassen, kommt es aufgrund der Vorspannkräfte in den Nabenlagern zu einem stärkeren Verschleiß im Laufe der Zeit, was dann zu einem frühzeitigen Ausfall der Hinterradnabe führen kann.

In Figur 2 ist angedeutet, dass die Endkappen zur Verwendung mit einer Schnellspannvorrichtung ausgebildet sind, was jedoch nicht näher dargestellt ist.

Da die Endkappen erfindungsgemäß austauschbar sind, lässt sich die erfindungsgemäße Hinterradnabe 10 auch für ein Steckachsensystem verwenden, was in Fig. 2 mit gestrichelten Endkappen angedeutet ist, siehe auch Fig. 6. Dazu weisen die Endkappen einen stirnseitigen Anschlag auf zum Anliegen an der Innenseiten der Ausfallenden. Die Endkappen weisen außerdem eine lichte Öffnung auf, durch die eine Steckachse geführt werden kann, die an einem Ende einen Anschlag aufweist, zum Anliegen an der Außenseite des einen Ausfallendes, und ein Außengewinde zum Einschrauben in ein Innengewinde an dem anderen Ausfallende, was jedoch ebenfalls nicht näher dargestellt ist.

In Fig. 7 sind die beiden Stirnverzahnungen 30, 32 gezeigt, die an dem ersten Scheibenkörper 34, in Fig. 7 rechts, und an dem zweiten Scheibenkörper 44, in Fig. 7 links, ausgebildet sind. Der zweite Scheibenkörper 44 ist, wie bereits erwähnt, am Nabenkörper 12 unbeweglich gehalten, während der erste Scheibenkörper 34 an dem Freilaufkörper 18 schwimmend gehalten ist, so dass sich der erste Scheibenkörper 34 auf den zweiten Scheibenkörper 44 zu- und von diesem wegbewegen kann.

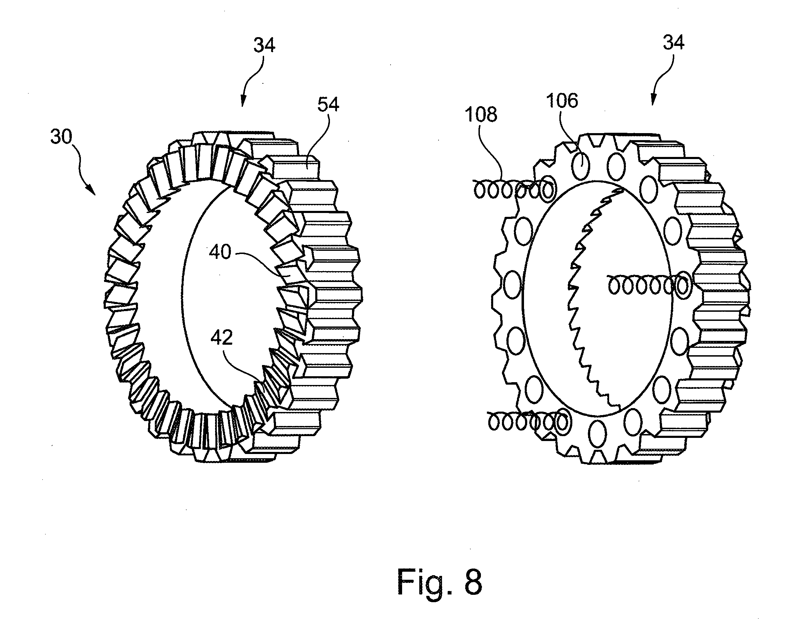

In Fig. 8 ist eine erste Ausführungsform des ersten Scheibenkörpers 34 gezeigt, einmal von der einen und einmal von der anderen Seite. Die an der einen Seite vorgesehene stirnseitige Verzahnung dient dem Eingriff mit dem zweiten Scheibenkörper 44. Die radial umlaufend angeordneten Vorsprünge dienen dem Eingriff in axial verlaufende Rillen an dem Freilaufkörper, die bereits in Zusammenhang mit Fig. 4 und 5 erwähnt wurden. In der rechten Bildhälfte ist der erste Scheibenkörper 34 von der Rückseite aus gezeigt. Der Scheibenkörper 34 weist dabei eine Vielzahl von als Sacklochbohrung ausgebildeten Aufnahmen 106 auf. In diese Lochbohrung 106 können mehrere Federn 108 eingesteckt werden, die den ersten Freilaufkörper als Vorspanneinrichtung 36 in Richtung der zweiten Stirnverzahnung des zweiten Scheibenkörpers 44 drängen. Durch mehrere, insbesondere mindestens drei, angeordnete Federn wird auf den ersten Scheibenkörper 34 in axialer Richtung ein gleichmäßiger Druck ausgeübt, der einem Kippen des Scheibenkörpers entgegenwirkt. Die Federn 108 können derart in die Lochbohrung 106 eingeschoben sein, dass sie verliersicher an dem ersten Scheibenkörper 34 gehalten sind, um bei einem Auseinanderbauen, zum Beispiel zu Wartungszwecken, nicht abhanden zu kommen.

Beispielsweise können die Federn 108 als Kegelfedern ausgebildet sein, um beim Zusammendrücken möglichst wenig Raum in Anspruch zu nehmen.

An ihrem gegenüberliegenden Ende stützen sich die Federn an einem Vorsprung des Freilaufkörpers 18 ab, der jedoch nicht gezeigt ist.

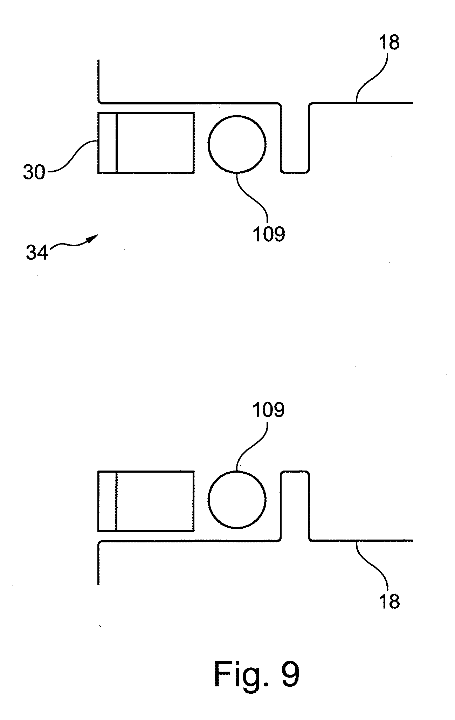

Alternativ zur Ausbildung mit Federn kann vorzugsweise ein elastischer Ring 109 vorgesehen sein, der in der Aufnahme des Freilaufkörpers zwischen einem Anschlag und dem ersten Scheibenkörper angeordnet ist und somit als Vorspanneinrichtung wirkt (siehe Figur 9).

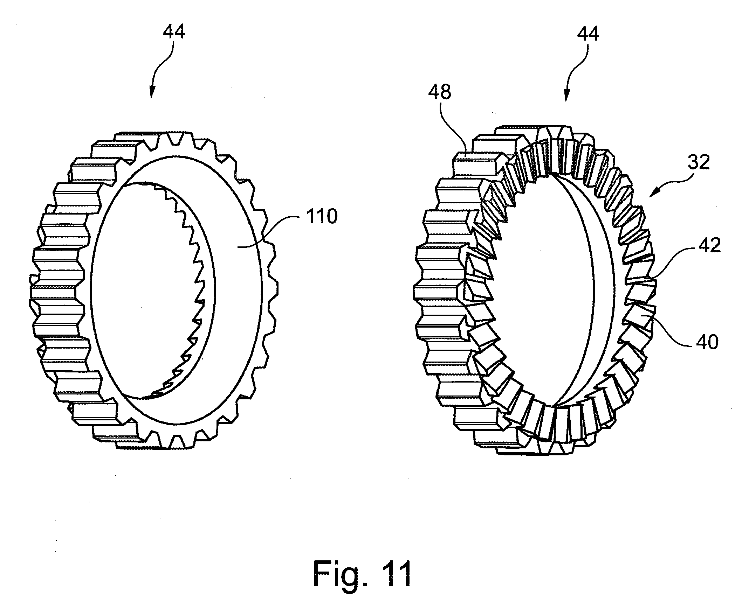

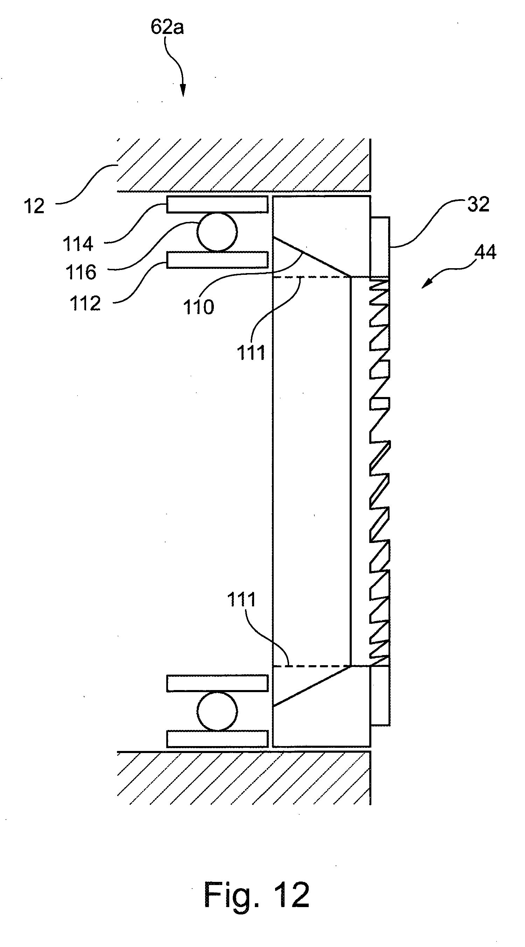

Zur weiteren Gewichtsreduzierung ist in Fig. 11 eine weitere Ausführungsform gezeigt, bei der der zweite Scheibenkörper 44 mit einer verringerten Querschnittsfläche ausgebildet ist. Wie in Fig. 12 im Querschnitt zu sehen ist, ist der Bereich hinter der Stirnverzahnung mit einer Abschrägung 110 ausgebildet. Das weggenommene Material, d.h. die Materialreduzierung ist mit einer gestrichelten Linie 111 angedeutet. Die Stirnverzahnung selbst sowie auch die umlaufende Radialverzahnung sind dahingehend unverändert beibehalten. Diese Abschrägung hat neben der Gewichtsersparnis auch noch einen weiteren Vorteil, der ebenfalls in Figur 12 zu erkennen ist. Schematisch angedeutet ist eine der beiden Lagereinheiten 62a des zweiten Nabenlagers 60. Die Lagereinheit weist einen inneren Laufring 112 und einen äußeren Laufring 114 auf, wobei zwischen den beiden Laufringen ein Wälzkörper 116 angedeutet ist. Das Lager kann als Rillenkugellager ausgebildet sein, so dass es sich bei dem Wälzkörper 116 um Kugelelemente handelt, die in nicht dargestellten Rillen des äußeren und inneren Laufrings gehalten sind.

Da der äußere Laufring 114 in Bezug zu dem Nabenkörper 12 unbeweglich ist, d.h., er dreht sich mit dem Nabenkörper mit, was ebenso auch für den zweiten Scheibenkörper 44 gilt, der ja mit den äußeren radialen Vorsprüngen in die Rillenstruktur des Nabenkörpers eingreift, können die beiden Teile, d.h. der äußere Laufring 114 und der zweite Scheibenkörper 44 aneinander anliegen im Bereich der Stirnfläche des äußeren Laufrings.

Da sich der innere Laufring mit der Nabenachse dreht, und damit auch in Relation zu dem zweiten Scheibenkörper 44, muss zwischen der Stirnseite des inneren Laufrings 112 und dem zweiten Scheibenkörper 44 ein Mindestabstand vorhanden sein. Da der zweite Scheibenkörper 44 mit der Abschrägung 110 ausgebildet ist, ist dieser Abstand in ausreichendem Maße gewährleistet, wobei dies bei der eckigen Querschnittsform, die mit der Strichelung 111 angedeutet ist, nicht der Fall wäre. Für einen komplett ausgeprägten Querschnitt im Sinne der Strichelung 111 ohne Abschrägung 110 müssten die beiden Bauteile, d.h. das Lager und der zweite Scheibenkörper, mit einer Distanz zueinander angeordnet werden.

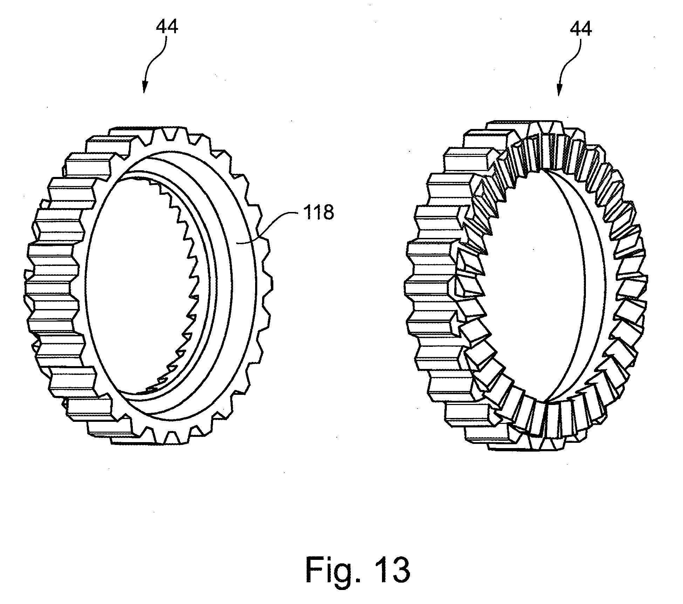

In Figur 13 ist eine weitere Ausführungsform des zweiten Scheibenkörpers 44 gezeigt, bei der anstelle der Abschrägung ein L-förmiger Querschnitt mit einer noch weiteren Querschnittsreduzierung 118 vorgesehen ist.

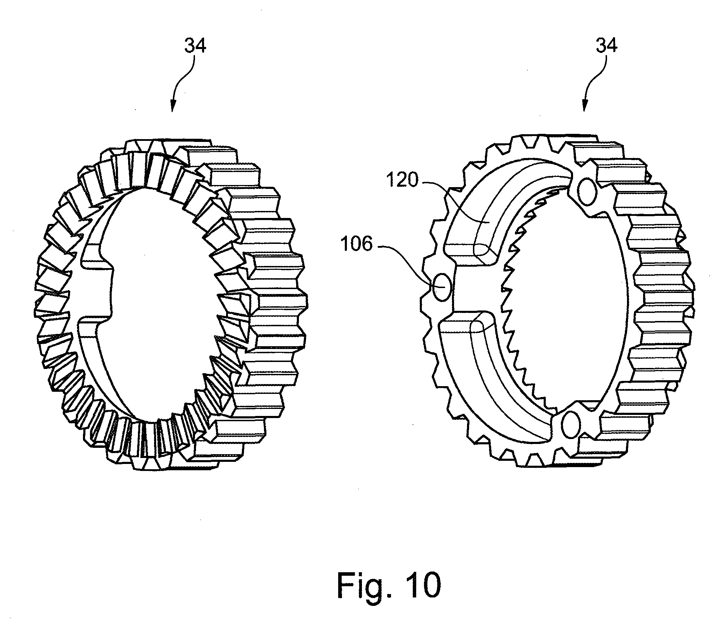

In Figur 10 ist eine weitere Ausführungsform des ersten Scheibenkörpers 34 gezeigt, bei der ebenfalls ein L-förmiger Querschnitt des Scheibenkörpers mit entsprechenden Ausnehmungen 120 vorgesehen ist, wobei an wenigstens drei Stellen ein Vollquerschnitt vorgesehen ist, um in diesem Bereich die bereits im Zusammenhang mit Figur 8 erwähnten Lochbohrungen 106 vornehmen zu können.

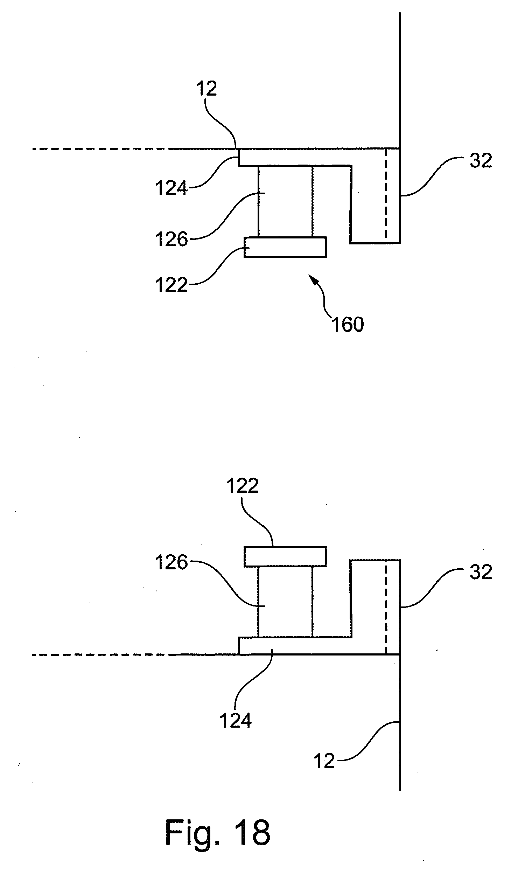

In Fig. 18 ist eine Ausführungsform eines zweiten Nabenlagers 160 gezeigt, das einen inneren Laufring 122 und einen äußeren Laufring 124 aufweist, zwischen denen ein Wälzelement 126 vorgesehen ist, wobei es sich vorzugsweise um ein Rillenkugellager handelt, so dass der Wälzkörper 126 ein Kugelelement ist, das zwischen den beiden Laufringen gehalten ist, wobei die Laufringe als nicht dargestellte Rillenstrukturen ausgebildet sind, um den Wälzkörper 126 in axialer Richtung zu halten. Der äußere Laufring 124 ist mit der zweiten Stirnverzahnung 32 einstückig ausgebildet, d.h., der Laufring 124 weist einen L-förmigen Querschnitt auf, so dass die Stirnverzahnung 32 an dem stirnseitigen, in axialer Richtung weisenden Bereich ausgebildete werden kann. An seiner äußeren Umfangfläche ist der Laufring 124 mit den bereits erwähnten Vorsprüngen ausgebildet, die in Ausnehmungen des Nabenkörpers eingreifen, um eine Drehbewegung auf den Nabenkörper übertragen zu können.

Neben der weiteren Gewichtsreduzierung und dem vereinfachten Montagevorgang lässt sich insbesondere der Bauraum verringern und dadurch das zweite Nabenlager möglichst weit zum Freilaufkörper hin anordnen. Dadurch ergeben sich günstigere Hebelverhältnisse.

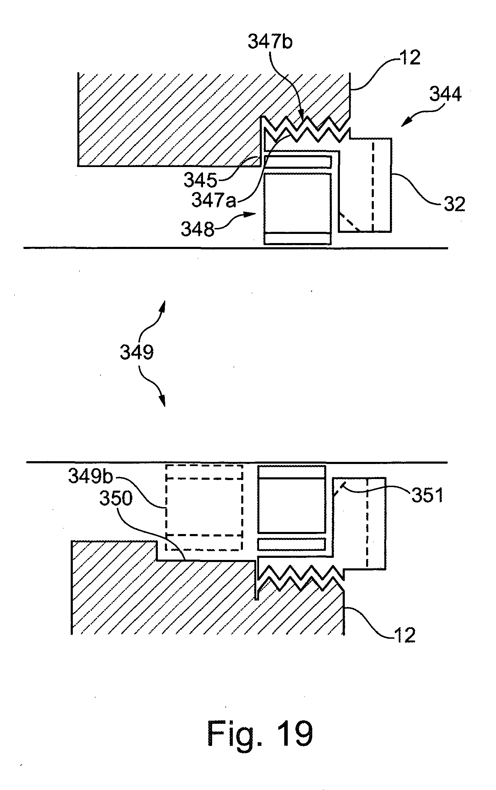

In Fig. 19 ist eine Ausführungsform gezeigt, bei der ein zweiter Scheibenkörper 344 mit Stirnverzahnung 32 in eine Aufnahmeöffnung 346 des Nabenkörpers 12 eingeschraubt ist, wozu der Scheibenkörper 344 ein Außengewinde 347a und die Aufnahmeöffnung ein Innengewinde 347b aufweisen, das mit einem Anschlag 345 ausgebildet ist. Um das Lager der Nabe möglichst weit zum Achsenende anzuordnen, d.h. um die Krafteinleitung in den Achskörper 14 möglichst nahe an dessen Auflager in den (nicht gezeigten) Rahmenelementen zu ermöglichen, weist der zweite Scheibenkörper 344 eine Aufnahme 348 als Sitz für ein Nabenlager 349 auf. Wenn der Innendurchmesser der Aufnahme 348 entsprechend gleich einer Aufnahme 350 des Nabenkörpers ausgebildet ist, kann auch eine zweite Lagereinheit, in Fig. 19 nur in der unteren Hälfte der Zeichnung gestrichelt dargestellt, angeordnet werden.

Die gezeigte Ausführungsform eignet sich daneben auch für die Aufnahme von zwei Lagereinheiten in der Aufnahme 348 des zweiten Scheibenkörpers 344, wenn die Aufnahme entsprechend tief ausgebildet wird.

An seinem inneren Ende kann der zweite Scheibenkörper 344 mit einer gestrichelt angedeuteten Abschrägung ausgebildet 351 sein, um nicht an dem inneren Laufring des Nabenlagers anzuliegen.

## Patentansprüche

1. Hinterradnabe (10) für ein Fahrrad, mit:
- einem Nabenkörper (12);
- einem Achskörper (14);
- einer ersten Lagervorrichtung (16) zwischen dem Achskörper und dem Nabenkörper, wobei der Nabenkörper in Relation zum Achskörper um eine Drehachse (24) drehbar gehalten ist;
- einem Freilaufkörper (18) zur Aufnahme wenigstens eines Zahnrads;
- einer zweiten Lagervorrichtung (20) zwischen dem Achskörper und dem Freilaufkörper, wobei der Freilaufkörper in Relation zum Achskörper um die Drehachse drehbar gehalten ist; und
- einer Freilaufeinrichtung (22) zwischen dem Freilaufkörper und dem Nabenkörper, die in einer ersten Drehrichtung (26) um die Drehachse eine Kopplung zwischen dem Freilaufkörper und dem Nabenkörper bewirkt und der Freilaufkörper in einer zweiten Drehrichtung (28), die der ersten Drehrichtung entgegengesetzt ist, gegenüber dem Nabenkörper frei drehbar ist; wobei die Freilaufeinrichtung eine erste (30) und eine zweite Stirnverzahnung (32) aufweist, die einander zugewandt sind und axial beweglich zueinander gehalten sind und von denen die eine in Bezug zum Nabenkörper und die andere in Bezug zum Freilaufkörper drehstarr ausgebildet ist;
wobei die erste Lagervorrichtung ein erstes (58) und ein zweites Nabenlager (60) aufweist; wobei jedes Nabenlager einen Innenring und einen Außenring aufweist; und
wobei jedes Nabenlager mit dem Innenring axial in einer ersten Halterichtung in Bezug zur Nabenachse einseitig gehalten ist, und wobei jedes Nabenlager mit dem Außenring in einer zweiten Halterichtung, die der ersten Halterichtung entgegengesetzt ist, in Bezug zum Nabenkörper einseitig gehalten ist; wobei die erste Halterichtung des zweiten Nabenlagers entgegengesetzt zur ersten Halterichtung des ersten Nabenlagers verläuft;
wobei die zweite Lagervorrichtung ein erstes (78) und ein zweites Freilauflager (80) aufweist; wobei jedes Freilauflager einen Innenring und einen Außenring aufweist;
wobei jedes Freilauflager mit dem Innenring axial in einer ersten Halterichtung in Bezug zur Nabenachse einseitig gehalten ist und mit dem Außenring in einer zweiten Halterichtung, die der ersten Halterichtung entgegengesetzt ist, in Bezug zum Freilaufkörper einseitig gehalten sind; und wobei die erste Halterichtung des zweiten Freilauflagers entgegengesetzt zur ersten Halterichtung des ersten Freilauflagers verläuft; und
wobei eine erste Endkappe (82) und eine zweite Endkappe (84) vorgesehen sind, die auf die beiden Enden der Nabenachse aufgesetzt sind und auf ihrer Innenseite (99) an dem jeweiligen stirnseitigen Ende der Nabenachse anliegen, so dass in montiertem Zustand eine in axialer Richtung auf die Hinterradnabe wirkende Einspannkraft von den Endkappen über den Achskörper übertragbar ist.

2. Hinterradnabe nach Anspruch 1,
wobei der Nabenkörper für das erste und das zweite Nabenlager eine erste (64) und eine zweite Lageraufnahme (66) aufweisen, die jeweils zur Aufnahme von zwei Lagereinheiten (62a, 62b) ausgebildet sind; und wobei pro Nabenlager eine der zwei Lagereinheiten als Distanzeinheit (63) ausgebildet ist.

3. Hinterradnabe nach einem der vorhergehenden Ansprüche,
wobei die erste Stirnverzahnung auf einem ersten Scheibenkörper (34) ausgebildet ist, der in Bezug zur Drehachse schwimmend gehalten ist und durch eine Vorspanneinrichtung (36) in Richtung der zweiten Stirnverzahnung gedrängt wird, und die zweite Stirnverzahnung wenigstens in Vorspannrichtung unbeweglich gehalten ist; und
wobei die zweite Stirnverzahnung auf einem zweiten Scheibenkörper (44) ausgebildet ist, der in eine Aufnahmeöffnung des Nabenkörpers eingeschraubt ist, wobei die Einschraubrichtung der Kopplungsrichtung entspricht.

4. Hinterradnabe nach einem der vorhergehenden Ansprüche,
wobei die erste Stirnverzahnung auf einem ersten Scheibenkörper (34) ausgebildet ist, der in Bezug zur Drehachse schwimmend gehalten ist und durch eine Vorspanneinrichtung (36) in Richtung der zweiten Stirnverzahnung gedrängt wird;
wobei die Vorspanneinrichtung eine sich elastisch rückstellende Vorrichtung aufweist, die sich an dem Freilaufkörper abstützt und den ersten Scheibenkörper in Richtung der zweiten Stirnverzahnung drückt; und
wobei die sich elastisch rückstellende Vorrichtung derart ausgebildet ist, dass der erste Scheibenkörper gleichmäßig in Richtung der zweiten Stirnverzahnung gedrückt ist und eine Vorspannkraft gegen ein Verkippen erzeugbar ist; und
wobei die Vorspanneinrichtung einen elastischen Ringkörper aufweist, der zwischen dem Freilaufkörper und dem ersten Scheibenkörper angeordnet ist, und an dem der erste Scheibenkörper anliegt.

5. Hinterradnabe nach einem der vorhergehenden Ansprüche,
wobei das erste (58) und das zweite Nabenlager (60) jeweils an einem der beiden stirnseitigen Bereichen des Nabenkörpers angeordnet sind; und
wobei das Nabenlager, das zum Freilaufkörper hin orientiert ist, einen inneren Laufring (122) und einen äußeren Laufring aufweist (124) und die zweite Stirnverzahnung (32) einstückig mit dem äußeren Laufring (124) ausgebildet ist.

6. Laufrad (524) für ein Fahrrad (500), mit:
- einer Felge (524);
- einer Nabe (532); und
- einem Speichenkörper (526);
wobei der Speichenkörper die Felge mit der Nabe verbindet; und
wobei die Nabe als Hinterradnabe (10) nach einem der vorhergehenden Ansprüche ausgebildet ist.

7. Fahrrad (500) mit einem Laufrad nach Anspruch 6.

## Claims

1. A rear wheel hub (10) for a bicycle, with
- a hub body (12);
- an axle body (14);
- a first bearing device (16) between the axle body and the hub body, wherein the hub body is held in relation to the axle body so as to be rotatable around a rotational axis (24);
- a freewheel body (18) for accommodating at least one sprocket;
- a second bearing device (20) between the axle body and the freewheel body, wherein the freewheel body is held in relation to the axle body so as to be rotatable around the rotational axis; and
- a freewheel arrangement (22) between the freewheel body and the hub body, which establishes a coupling between the freewheel body and the hub body in a first rotational direction (26) around the rotational axis, and the freewheel body is freely rotatable in relation to the hub body in a second rotational direction (28) opposite the first rotational direction; wherein the freewheel arrangement comprises a first (30) and a second (32) spur gearing, which face each other and which are held axially movable in relation to each other, and of which one is rotationally fixed relative to the hub body, and the other one is rotationally fixed relative to the freewheel body;
wherein the first bearing device comprises a first (58) and a second (60) hub bearing; wherein each hub bearing comprises an inner ring and an outer ring; and
wherein each hub bearing is axially held with the inner ring on only one side in a first holding direction in relation to the hub axle, and wherein each hub bearing is axially held with the outer ring on only one side in a second holding direction opposite the first holding direction in relation to the hub body; wherein the first holding direction of the second hub bearing is opposite to the first holding direction of the first hub bearing;
wherein the second bearing device comprises a first (78) and a second (80) freewheel bearing; wherein each freewheel bearing comprises an inner ring and outer ring;
wherein each freewheel bearing is axially held with the inner ring on only one side in a first holding direction in relation to the hub axle, and with the outer ring in a second holding direction opposite the first holding direction in relation to the freewheel body; and wherein the first holding direction of the second freewheel bearing is opposite the first holding direction of the first freewheel bearing; and
wherein a first end cap (82) and a second end cap (84) are provided, placed on the two ends of the hub axle, and which abut on their interior side (99) against the respective end-face of the hub axle, so that, in a mounted state, a clamping force acting on the rear wheel hub in an axial direction is transmissible from the end caps via the axle body.

2. The rear wheel hub according to claim 1,
wherein the hub body for the first and second hub bearing comprises a first (64) and a second bearing receptacle (66), which each are designed to accommodate two bearing units (62a, 62b); and wherein one of the two bearing units per hub bearing is designed as a spacer unit (63).

3. The rear wheel hub according to one of the preceding claims,
wherein the first spur gearing is formed on a first disk body (34), which is floatingly held in relation to the rotational axis, and is forced by a pre-tensioning device (36) in the direction of the second spur gearing, and the second spur gearing is immovably held at least in the pre-tensioning direction; and
wherein the second spur gearing is formed on a second disk body (44), which is screwed into a receiving hole of the hub body, wherein the screwing direction corresponds to the coupling direction.

4. The rear wheel hub according to one of the preceding claims,
wherein the first spur gearing is formed on a first disk body (34), which is floatingly held in relation to the rotational axis, and is forced by a pre-tensioning device (36) in the direction of the second spur gearing;
wherein the pre-tensioning device comprises an elastically resetting device, which is supported on the freewheel body, and which presses the first disk body in the direction of the second spur gearing; and
wherein the elastically resetting device is designed in such a way that the first disk body is pressed evenly in the direction of the second spur gearing, and a biasing force against a tilting of the first disk body is generated; and
wherein the pre-tensioning device comprises an elastic annular body, which is situated between the freewheel body and the first disk body, and against which the first disk body abuts.

5. The rear wheel hub according to one of the preceding claims,
wherein the first (58) and second (60) hub bearing are each arranged on one of the two end-face regions of the hub body; and
wherein the hub bearing oriented toward the freewheel body comprises an inner raceway ring (122) and an outer raceway ring (124), and the second spur gearing (32) is designed in one piece with the outer raceway ring (124).

6. A wheel (524) for a bicycle (500), with:
- a rim (524);
- a hub (532); and
- a spoke body (526);
wherein the spoke body connects the rim to the hub; and
wherein the hub is designed as a rear wheel hub (10) according to one of the preceding claims.

7. A bicycle (500) with a wheel according to claim 6.

## Revendications

1. Moyeu de roue arrière (10) pour une bicyclette, comportant :
- un corps de moyeu (12) ;
- un corps d'axe (14) ;
- un premier dispositif de roulement (16) entre le corps d'axe et le corps de moyeu, dans lequel le corps de moyeu est maintenu rotativement par rapport au corps d'axe autour d'un axe de rotation (24) ;
- un corps de roue libre (18) pour recevoir au moins une roue dentée ;
- un deuxième dispositif de roulement (20) entre le corps d'axe et e corps de roue libre, dans lequel le corps de roue libre est maintenu rotativement par rapport au corps d'axe autour de l'axe de rotation ; et
- un dispositif de roue libre (22) entre le corps de roue libre et le corps de moyeu, qui dans une première direction de rotation (26) provoque un couple entre le corps de roue libre et le corps de moyeu autour de l'axe de rotation et le corps de roue libre est librement rotatif par rapport au corps de moyeu dans une deuxième direction de rotation (28), qui est opposée à la première direction de rotation ; dans lequel le dispositif de roue libre présente une première (30) et une deuxième denture de pignon (32), qui sont tournées l'une vers l'autre et sont maintenues de manière mobile axialement l'une par rapport à l'autre et desquelles une est conçue de manière rigide en rotation par rapport au corps de moyeu et l'autre est conçue de manière rigide en rotation par rapport au corps de roue libre ;
dans lequel le premier dispositif de roulement présente un premier (58) et un deuxième roulement de moyeu (60) ; dans lequel chaque roulement de moyeu présente une bague intérieure et une bague extérieure ; et
dans lequel chaque roulement de moyeu est maintenu d'un côté avec la bague intérieure axiale dans une première direction de retenue par rapport à l'axe de moyeu, et dans lequel chaque roulement de moyeu est maintenu d'un côté avec la bague extérieure dans une deuxième direction de retenue, qui est opposée à la première direction de retenue, par rapport au corps de moyeu ; dans lequel la première direction de retenue du deuxième roulement de moyeu s'étend en sens opposé à la première direction de retenue du premier roulement de moyeu ;
dans lequel le deuxième dispositif de roulement présente un premier (78) et un deuxième roulement de roue libre (80) ; dans lequel chaque roulement de roue libre présente une bague intérieure et une bague extérieure ;
dans lequel chaque roulement de roue libre est maintenu d'un côté avec la bague intérieure axiale dans une première direction de retenue par rapport à l'axe de moyeu et est maintenu d'un côté avec la bague extérieure dans une deuxième direction de retenue, qui est opposée à la première direction de retenue, par rapport au corps de roue libre ; et dans lequel la première direction de retenue du deuxième roulement de roue libre s'étend en sens opposé à la première direction de retenue du premier roulement de roue libre ; et
dans lequel un premier capuchon d'extrémité (82) et un deuxième capuchon d'extrémité (84) sont prévus, qui sont enfoncés sur les deux extrémités de l'axe de moyeu et viennent reposer sur leur côté intérieur (99) sur l'extrémité frontale respective de l'axe de moyeu, de telle sorte qu'en l'état montré une force de serrage agissant dans la direction axiale sur le moyeu de roue arrière puisse être transmise par les capuchons d'extrémité par l'intermédiaire du corps d'axe.

2. Moyeu de roue arrière selon la revendication 1,
dans lequel le corps de moyeu pour le premier et le deuxième roulement de moyeu présente un premier (64) et un deuxième logement de roulement (66), qui sont respectivement conçus pour renfermer deux unités de roulement (62a, 62b) ; et dans lequel une des deux unités de roulement est conçue comme unité d'entretoise (63) par roulement de moyeu.

3. Moyeu de roue arrière selon une des revendications précédentes,
dans lequel la première denture de pignon est conçue sur un premier corps de rayon de roue (34), qui est maintenu de manière flottante par rapport à l'axe de rotation et est refoulé par un dispositif de précontrainte (36) dans la direction de la deuxième denture de pignon, et la deuxième denture de pignon est maintenue de manière immobile au moins dans la direction de précontrainte ;
et dans lequel la deuxième denture de pignon est conçue sur un deuxième corps de rayon de roue (44), qui est vissé dans une ouverture de réceptacle du corps de moyeu, dans lequel la direction de vissage correspond à la direction de couplage.

4. Moyeu de roue arrière selon une des revendications précédentes,
dans lequel la première denture de pignon est conçue sur un premiers corps de rayon de roue (34), qui est maintenu de manière flottante par rapport à l'axe de rotation et est refoulé par un dispositif de précontrainte (36) dans la direction de la deuxième denture de pignon ;
dans lequel le dispositif de précontrainte présente un dispositif de rappel élastique, qui s'appuie sur le corps de roue libre et presse la premier corps de rayon de roue dans la direction de la deuxième denture de pignon ; et
dans lequel le dispositif de rappel élastique est conçu de telle sorte que le premier corps de rayon de roue soit pressé uniformément dans la direction de la deuxième denture de pignon et qu'une force de précontrainte contre un basculement puisse être générée ; et
dans lequel le dispositif de précontrainte présente un corps annulaire élastique, qui est disposé entre le corps de roue libre et le premier corps de rayon de roue, et vient reposer sur le premier corps de rayon de roue.

5. Moyeu de roue arrière selon une des revendications précédentes,
dans lequel le premier (58) et le deuxième roulement de moyeu (60) sont respectivement disposés sur une des deux zones frontales du corps de moyeu ; et
dans lequel le roulement de moyeu, qui est orienté dans la direction du corps de roue libre, présente une bague de roulement intérieure (122) et une bague de roulement extérieure (124) et la deuxième denture de pignon (32) est conçue en un seul tenant avec la bague de roulement extérieure (124).

6. Roue (524) pour une bicyclette (500), comportant :
- une jante (524) ;
- un moyeu (532) ; et
- un corps de rayon de roue (526) ;
dans lequel le corps de rayon de roue relie la jante au moyeu ; et
dans lequel le moyeu est conçu comme un moyeu de roue arrière (10) selon une des revendications précédentes.

7. Bicyclette (500) comportant une roue selon la revendication 6.
